# EUROPÄISCHE PATENTSCHRIFT

(11) **EP 2 516 588 B1**
(45) Veröffentlichungstag und Bekanntmachung des Hinweises auf die Patenterteilung: **18.02.2015**
(21) Anmeldenummer: 10788247.4
(22) Anmeldetag: 29.11.2010
(51) Int. Cl.: C09K 19/20, C09K 19/34, C09K 19/44, C09K 19/04

(54) **FLÜSSIGKRISTALLINES MEDIUM UND FLÜSSIGKRISTALLANZEIGE**
LIQUID CRYSTALLINE MEDIUM AND LIQUID CRYSTALLINE DISPLAY
MILIEU CRISTAL LIQUIDE ET DISPOSITIFS D'AFFICHAGE À BASE DE CRISTAUX LIQUIDES

(30) Priorität: 21.12.2009 DE 102009060012
(43) Veröffentlichungstag der Anmeldung: 31.10.2012
(73) Patentinhaber: Merck Patent GmbH, 64293 Darmstadt (DE)
(72) Erfinder: CZANTA, Markus, 64289 Darmstadt (DE); HIRSCHMANN, Harald, 64291 Darmstadt (DE); BARAN, Sven, 64832 Babenhausen (DE); LIETZAU, Lars, 64295 Darmstadt (DE)
(86) Internationale Anmeldenummer: PCT/EP2010/007213
(87) Internationale Veröffentlichungsnummer: WO 2011/082742

(56) Entgegenhaltungen:
- EP-A1- 1 333 082
- EP-A1- 1 908 812
- DE-A1- 10 243 776
- DE-A1-102004 012 970
- DE-A1-102005 027 762
- US-A1- 2009 101 869

## Beschreibung

### Gebiet der Erfindung

Die vorliegende Erfindung betrifft flüssigkristalline Medien und diese Medien enthaltende Flüssigkristallanzeigen, speziell Anzeigen, die durch eine Aktivmatrix adressiert werden und insbesondere Anzeigen des Typs Twisted Nematic (TN), In Plane Switching (IPS) oder Fringe Field Switching (FFS).

### Stand der Technik und zu lösendes Problem

Flüssigkristallanzeigen (Liquid Crystal Displays - LCDs) werden in vielen Bereichen genutzt, um Informationen anzuzeigen. LCDs werden sowohl für Direktsichtanzeigen als auch für Anzeigen des Projektionstyps verwendet. Als elektrooptische Modi werden beispielsweise Twisted Nematic (TN), Super Twisted Nematic (STN), Optically Compensated Bend (OCB) und Electrically Controlled Birefringence (ECB) zusammen mit ihren verschiedenen Modifikationen sowie andere verwendet. Alle diese Modi nutzen ein elektrisches Feld, das im Wesentlichen rechtwinklig zu den Substraten beziehungsweise zur Flüssigkristallschicht verläuft. Neben diesen Modi gibt es auch elektrooptische Modi, die ein elektrisches Feld nutzen, das im Wesentlichen parallel zu den Substraten beziehungsweise der Flüssigkristallschicht verläuft, wie etwa der In-Plane Switching (IPS) Modus (wie z.B. in DE 40 00 451 und EP 0 588 568 offenbart) und im Fringe Field Switching (FFS) Modus, in dem ein starkes sogenanntes "fringe field" vorliegt, also ein starkes elektrisches Feld nahe am Rand der Elektroden und in der gesamten Zelle ein elektrisches Feld, welches sowohl eine starke vertikale Komponente als auch eine starke horizontale Komponente aufweist. Vor allem diese beiden letzteren elektrooptischen Modi werden für LCDs in modernen Tischmonitoren verwendet und sind für die Nutzung in Anzeigen für Fernseher und Multimedia-Anwendungen vorgesehen. Die Flüssigkristalle gemäß der vorliegenden Erfindung werden vorzugsweise in Anzeigen dieser Art verwendet. Generell werden in FFS-Displays dielektrisch positive, flüssigkristalline Medien mit eher kleineren Werten der dielektrischen Anisotropie verwendet, aber auch bei IPS-Displays werden teilweise flüssigkristalline Medien mit einer dielektrischen Anisotropie von nur ca. 3 oder sogar darunter verwendet.

Für diese Anzeigen sind neue flüssigkristalline Medien mit verbesserten Eigenschaften erforderlich. Insbesondere müssen die Ansprechzeiten für viele Arten von Anwendungen verbessert werden. Es sind daher flüssigkristalline Medien mit geringeren Viskositäten (T1), speziell mit geringeren Rotationsviskositäten (γ₁) erforderlich. Die Rotationsviskosität sollte insbesondere für Monitoranwendungen 80 mPa·s oder weniger, vorzugsweise 60 mPa·s oder weniger und speziell 55 mPa·s oder weniger betragen. Neben diesem Parameter müssen die Medien über einen Bereich der nematischen Phase mit geeigneter Breite und Lage, sowie eine geeignete Doppelbrechung (Δn) verfügen und dielektrische Anisotropie (Δε) sollte hoch genug sein, um eine einigermaßen niedrige Betriebsspannung zu ermöglichen. Vorzugsweise sollte Δε höher als 2 und sehr bevorzugt höher als 3, vorzugsweise jedoch nicht höher als 15 und insbesondere nicht höher als 12 liegen, da dies einem zumindest einigermaßen hohen spezifischen Widerstand entgegenstehen würde.

Für Anwendungen als Displays für Notebooks oder andere mobile Anwendungen sollte die Rotationsviskosität bevorzugt 120 mPa·s oder weniger und besonders bevorzugt 100 mPa·s oder weniger betragen. Hier sollte die dielektrische Anisotropie (Δε) vorzugsweise höher als 8 und besonders bevorzugt höher als 12 sein.

Vorzugsweise werden die Anzeigen gemäß der vorliegenden Erfindung durch eine Aktivmatrix (active matrix LCDs, kurz AMDs), bevorzugt durch eine Matrix aus Dünnschichttransistoren (TFTs), adressiert. Die erfindungsgemäßen Flüssigkristalle können jedoch in vorteilhafter Weise auch in Anzeigen mit anderen bekannten Adressierungsmitteln verwendet werden.

Es gibt zahlreiche unterschiedliche Anzeigemodi, die Verbundsysteme aus niedrigmolekularen Flüssigkristallmaterialien zusammen mit Polymermaterialien verwenden. Es sind dies z.B. PDLC- (polymer dispersed liquid crystal), NCAP- (nematic curvilinearily aligned phase) und PN-Systeme (polymer network), wie beispielsweise in WO 91/05 029 offenbart, oder ASM-Systeme (axially symmetric microdomain) und andere. Im Gegensatz hierzu verwenden die gemäß der vorliegenden Erfindung speziell bevorzugten Modi das Flüssigkristallmedium als solches, auf Oberflächen ausgerichtet. Diese Oberflächen werden typischerweise vorbehandelt, um eine uniforme Orientierung des Flüssigkristallmaterials zu erzielen. Die Anzeigemodi gemäß der vorliegenden Erfindung verwenden vorzugsweise ein elektrisches Feld, das im Wesentlichen parallel zur Verbundschicht verläuft.

Flüssigkristallzusammensetzungen, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt. Diese Zusammensetzungen sind jedoch mit gravierenden Nachteilen behaftet. Die meisten von ihnen führen, neben anderen Mängeln, zu unvorteilhaft langen Ansprechzeiten, weisen zu geringe Werte für den spezifischen Widerstand auf und/oder erfordern Betriebsspannungen, die zu hoch sind. Außerdem besteht der Bedarf das Tieftemperaturverhalten der LCDs zu verbessern. Hier sind sowohl eine Verbesserung der Betriebseigenschaften, wie auch der Lagerfähigkeit nötig.

EP 1 333 082 A1, DE 10 2004 01 29 70 A1, DE 10 2005 027 762 A1, DE 102 43 776 A1, EP 1 908 812 A1 und US 20009/101 869 A1 offenbaren verschiedene Flüssigkristallmischungen für die Anwendung in Flüssigkristallanzeigen.

Verbindungen der Formeln 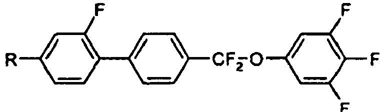 und 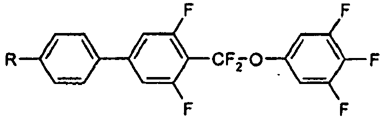 worin R unter anderem Alkyl bedeutet, werden, neben anderen Verbindungen, als mögliche Bestandteile von Flüssigkristallzusammensetzungen, die sich für IPS-Anzeigen eignen, in WO 2009/112153 A1 genannt. Die letztgenannten Verbindungen werden dort auch in entsprechenden Mischungen eingesetzt. Diese Mischungen haben jedoch einige Nachteile für praktische Anwendungen, insbesondere zu lange Schaltzeiten.

Es besteht daher ein erheblicher Bedarf an flüssigkristallinen Medien mit geeigneten Eigenschaften für praktische Anwendungen, wie einem breiten nematischen Phasenbereich, geeigneter optischer Anisotropie Δn entsprechend dem verwendeten Anzeigetyp, einem hohen Δε und speziell geringen Viskositäten für besonders kurze Schaltzeiten.

### Vorliegende Erfindung

Überraschenderweise wurde nun gefunden, dass flüssigkristalline Medien mit einem geeignet hohen Δε, einem geeigneten Phasenbereich und Δn verwirklicht werden können, welche die Nachteile der Materialien des Standes der Technik nicht oder zumindest nur in erheblich geringerem Maße aufweisen.

Diese verbesserten flüssigkristallinen Medien gemäß der vorliegenden Erfindung enthalten
- eine oder mehrere Verbindungen der Formel I 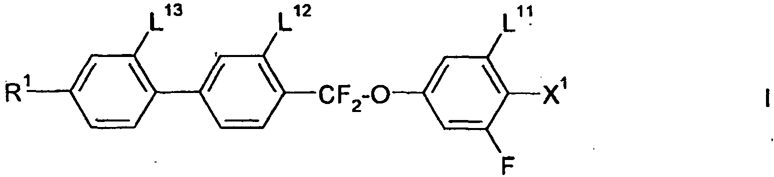 worin
   - R¹: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet,
   - L¹¹: H oder F und,
   im Fall L¹¹ = H,
   - L¹² und L¹³: unabhängig voneinander H oder F, vorzugsweise beide H und,
   im Fall L¹¹ = F,
   - L¹²: F und
   - L¹³: H oder F, und
   - X¹: F, Cl, -CFH₂, -CF₂H, -CF₃, -OCF₂H oder -OCF₃, bevorzugt F, bedeutet, und
- eine oder mehrere Verbindungen der Formel II und
- eine oder mehrere Verbindungen der Formel III 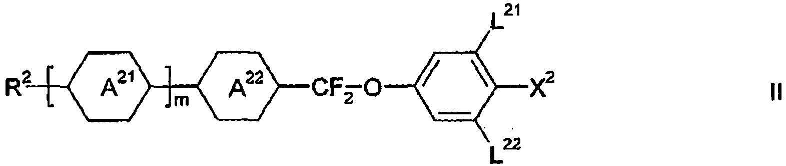 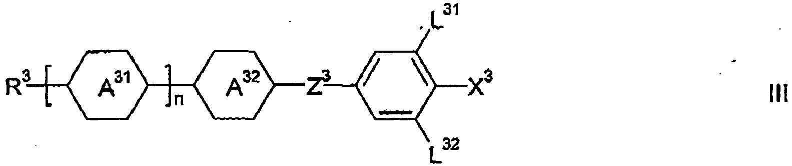 worin
   - R² und R³: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise R² und R³ Alkyl oder Alkenyl, 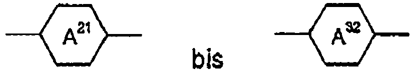 bei jedem Erscheinen unabhängig voneinander 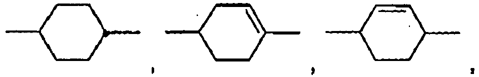 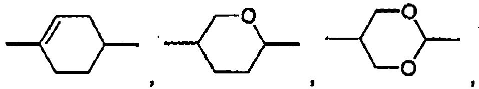 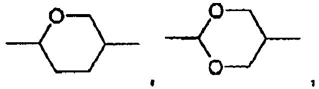 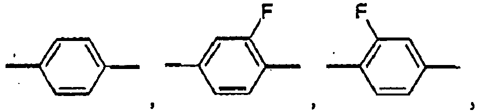 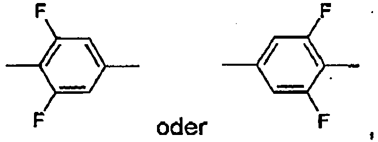 vorzugsweise 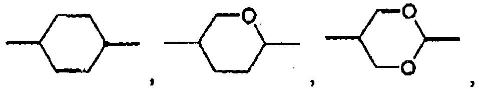 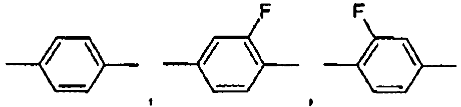 oder 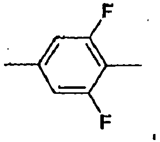
   - L²¹, L²², L³¹ und L³²: unabhängig voneinander H oder F, vorzugsweise L²¹ und/oder L³¹ F,
   - X² und X³: unabhängig voneinander Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃,
   - Z³: -CH₂CH₂-, -CF₂CF₂-, -COO-, *trans-* -CH=CH-, *trans-*-CF=CF-, -CH₂O- oder eine Einfachbindung, vorzugsweise -CH₂CH₂-, -COO-, *trans-* -CH=CH- oder eine Einfachbindung und ganz bevorzugt-COO-, *trans-*-CH=CH- oder eine Einfachbindung und
   - m und n: unabhängig voneinander 0, 1, 2 oder 3,
   - m: bevorzugt 1, 2 oder 3 und
   - n: bevorzugt 0, 1 oder 2 und besonders bevorzugt 1 oder 2, bedeuten,
- und die eine oder mehrere Verbindungen der Formel III sind oder enthalten eine oder mehrere der Verbindungen ausgewählt aus der Gruppe der Verbindungen der Formel III-2d-1 und III-2e-1 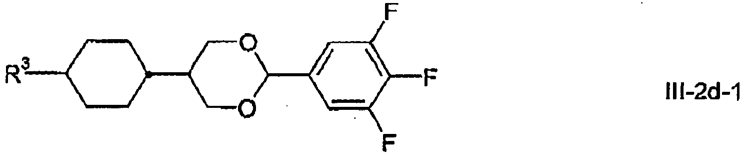 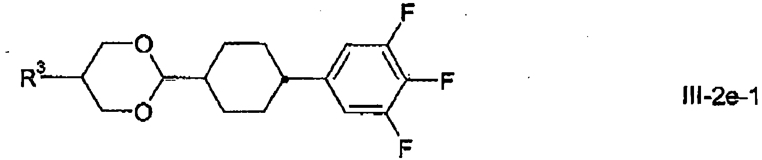 worin die Parameter die oben angegebenen Bedeutungen haben und
   wobei bei den Verbindungen der Formel II die Verbindungen der Formel I ausgeschlossen sind, und
- gegebenenfalls eine oder mehrere Verbindungen der Formel IV 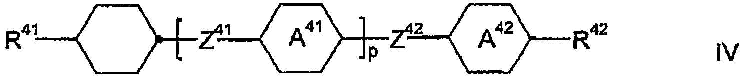 worin
   - R⁴¹ und R⁴²: unabhängig voneinander die oben unter Formel II für R² angegebene Bedeutung besitzen, vorzugsweise R⁴¹ Alkyl und R⁴² Alkyl oder Alkoxy oder R⁴¹ Alkenyl und R⁴² Alkyl, 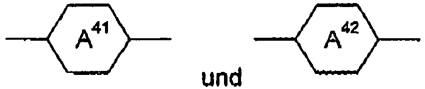
   unabhängig voneinander und bei zweifachem Auftreten von 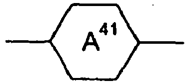 auch diese unabhängig voneinander 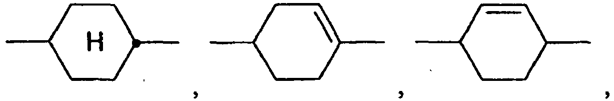 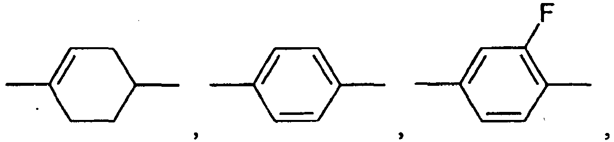 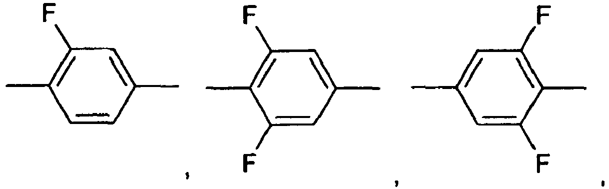 oder 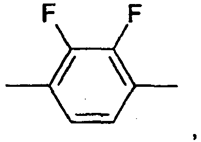 vorzugsweise eines oder mehrere von 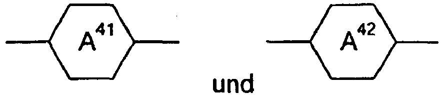 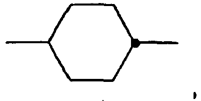
   - Z⁴¹ und Z⁴²: unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C=C- oder eine Einfachbindung, vorzugsweise eines oder mehrere von ihnen eine Einfachbindung und
   - p: 0, 1 oder 2, vorzugsweise 0 oder 1 bedeutet.

Die Verbindungen der Formeln I, II und III sind bevorzugt dielektrisch positive Verbindungen, vorzugsweise mit einer dielektrischen Anisotropie von mehr als 3.

Die Verbindungen der Formel IV sind bevorzugt dielektrisch neutrale Verbindungen, vorzugsweise mit einer dielektrischen Anisotropie im Bereich von -1,5 bis 3.

Bevorzugt enthalten die flüssigkristallinen Medien gemäß der vorliegenden Anmeldung insgesamt 1 bis 50 %, bevorzugt 1 bis 30 %, an Verbindungen der Formel I.

Die einzelnen Verbindungen der Formel I und gegebenenfalls der Verbindungen II und/oder III werden in einer Konzentration von 1 bis 20 %, bevorzugt von 1 bis 15 % eingesetzt. Diese Grenzen gelten insbesondere wenn jeweils zwei oder mehr homologe Verbindungen, also Verbindungen der gleichen Formel, eingesetzt werden. Wird von den Verbindungen einer Formel nur eine einzelne Substanz, also nur ein Homologes, eingesetzt so kann dessen Konzentration im Bereich von 2 bis 20 %, bevorzugt von 3 bis 14 %, liegen.

In einer bevorzugten Ausführungsform der vorliegenden Erfindung enthalten die erfindungsgemäßen Medien jeweils eine oder mehrere Verbindungen der Formel I ausgewählt aus der Gruppe der Verbindungen der Formeln I-1 bis I-4, bevorzugt ausgewählt aus der Gruppe der Verbindungen der Formeln I-2 und I-4, ganz besonders der Formel I-2: 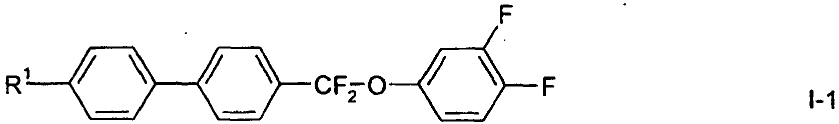 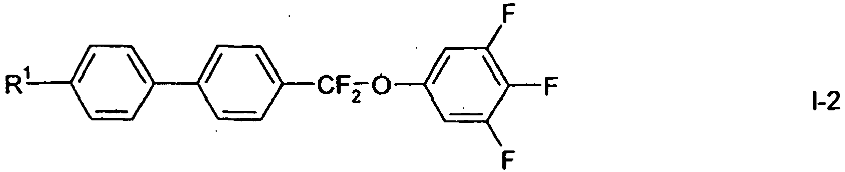 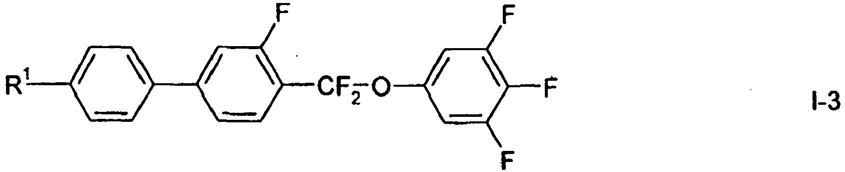 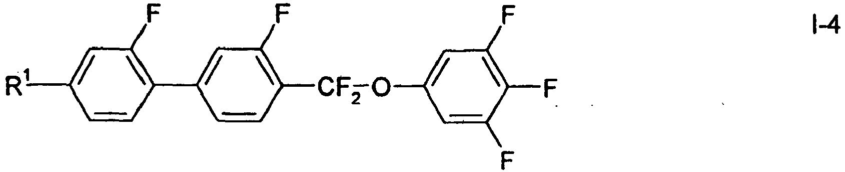 worin R¹ die oben unter Formel I angegebene Bedeutung besitzt.

Vorzugsweise enthalten die Medien gemäß der vorliegenden Erfindung zusätzlich zu den Verbindungen ausgewählt aus der Gruppe der Verbindungen der Formel I, bzw. deren bevorzugter Unterformeln, eine oder mehrere dielektrisch positive Verbindungen mit einer dielektrischen Anisotropie von mehr als 3, ausgewählt aus der Gruppe der Formeln II und III.

In einer bevorzugten Ausführungsform der vorliegenden Erfindung enthalten die erfindungsgemäßen Medien eine oder mehrere Verbindungen ausgewählt aus der Gruppe der Verbindungen der Formeln II-1 bis II-4, bevorzugt der Formeln II-1 und/oder II-2 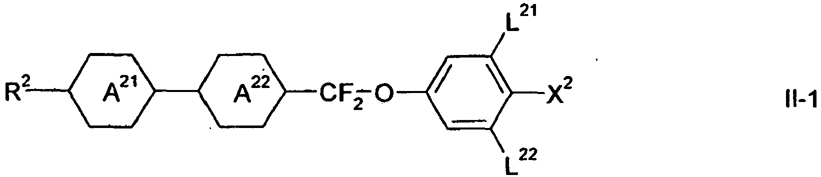 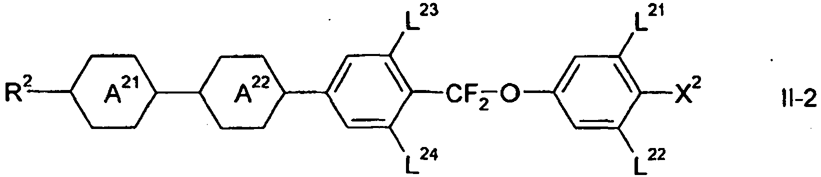 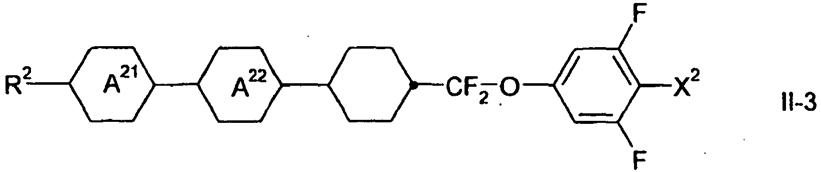 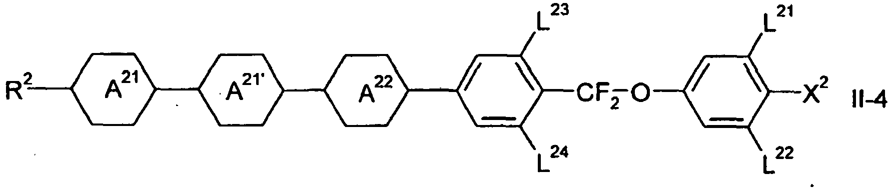 worin die Parameter die jeweiligen oben unter Formel II angegebenen Bedeutungen besitzen und L²³ und L²⁴ unabhängig voneinander H oder F, bevorzugt L²³ F, bedeutet und 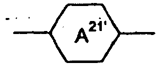 eine der bei 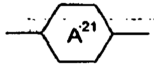 gegebenen Bedeutungen hat
und bei Formeln II-1 und II-4 X² bevorzugt F oder OCF₃, besonders bevorzugt F, und bei Formel II-3 vorzugsweise 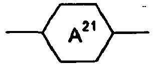 und 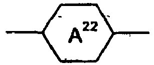 unabhängig voneinander 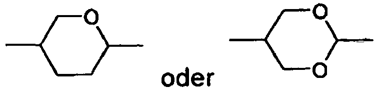 bedeuten,
wobei bei den Verbindungen der Formel II -1 die Verbindungen der Formel I ausgeschlossen sind,
und/oder ausgewählt aus der Gruppe der Verbindungen der Formeln III-1 und III-2 : 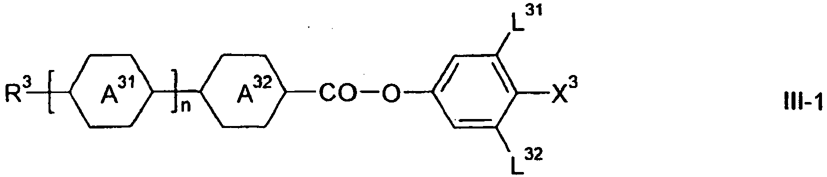 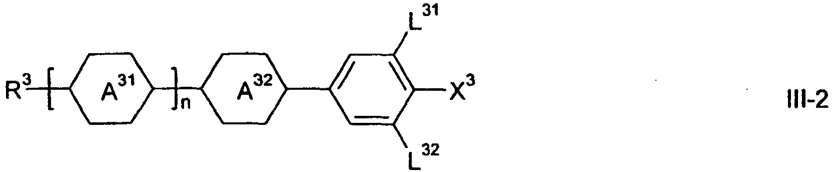 worin die Parameter die unter Formel III gegeben Bedeutung haben.

In einer bevorzugten Ausführungsform enthalten die Medien gemäß der vorliegenden Erfindung alternativ oder zusätzlich zu den Verbindungen der Formeln III-1 und/oder III-2 eine oder mehrere Verbindungen der Formel III-3 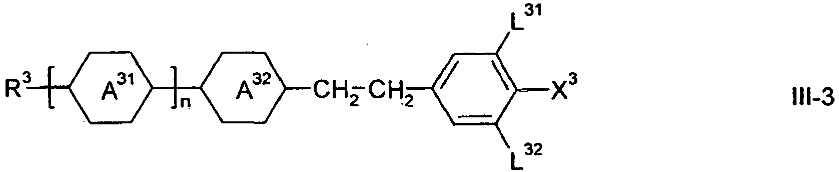 worin die Parameter die jeweiligen oben angegebenen Bedeutungen besitzen und die Parameter L³¹ und L³² unabhängig voneinander und von den anderen Parametern H oder F bedeuten.

Vorzugsweise enthalten die erfindungsgemäßen Medien eine oder mehrere Verbindungen ausgewählt aus der Gruppe der Verbindungen der Formeln II-1 bis II-4, worin L²¹ und L²² und/oder L²³ und L²⁴ beide F bedeuten.

In einer bevorzugten Ausführungsform enthalten die Medien eine oder mehrere Verbindungen, die ausgewählt sind aus der Gruppe der Verbindungen der Formeln II-2 und II-4, worin L²¹, L²², L²³ und L²⁴ alle F bedeuten.

Vorzugsweise enthalten die Medien eine oder mehrere Verbindungen der Formel II-1. Vorzugsweise sind die Verbindungen der Formel II-1 ausgewählt aus der Gruppe der Verbindungen der Formeln II-1a bis II-1e 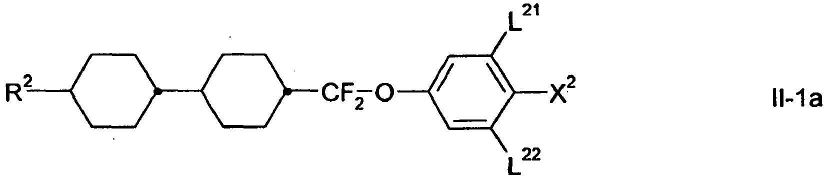 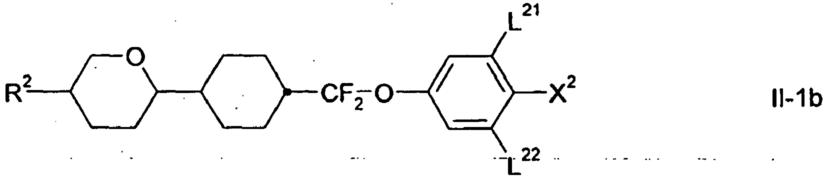 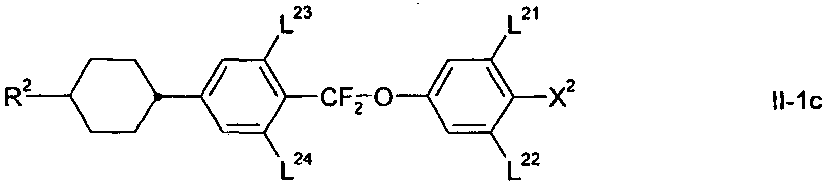 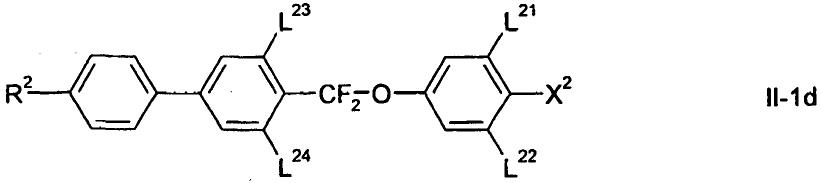 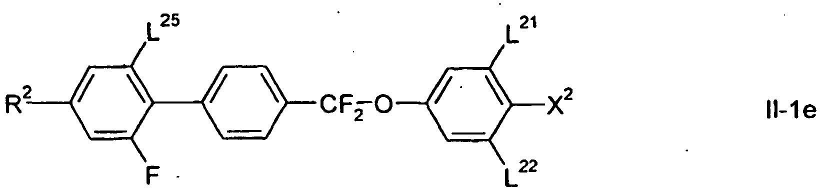 worin die Parameter die jeweiligen oben angegebenen Bedeutungen besitzen und L²³ bis L²⁵ unabhängig voneinander und von den anderen Parametern H oder F bedeuten und
bei den Verbindungen der Formel II -1d und II-1e die Verbindungen der Formel I ausgeschlossen sind, und
vorzugsweise
in den Formeln II-1a und II-1b
L²¹ und L²² beide F bedeuten,
in den Formeln II-1c und II-1d
L²¹ und L²² beide F und/oder L²³ und L²⁴ beide F bedeuten und
in Formel II-1e
L²¹, L²² und L²⁵ F bedeuten und jeweils die anderen Parameter die jeweiligen oben gegebenen Bedeutungen haben.

Speziell bevorzugte Verbindungen der Formel II-1 sind 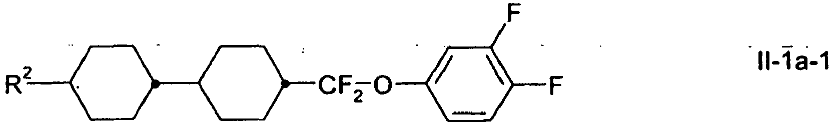 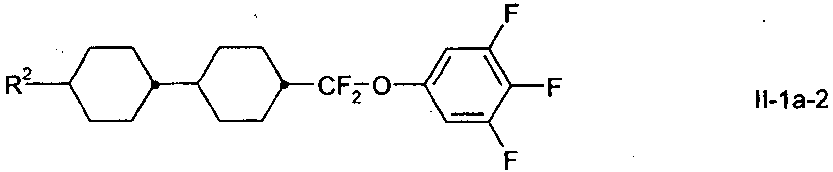 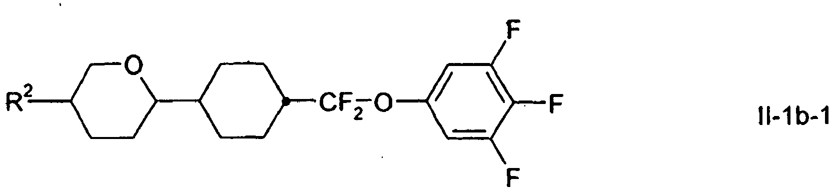 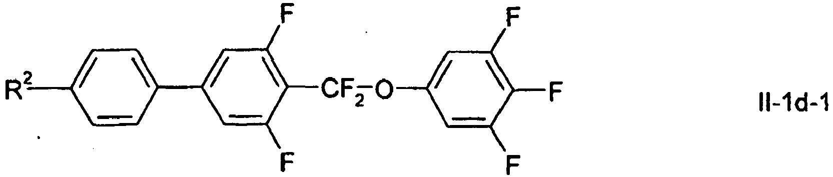 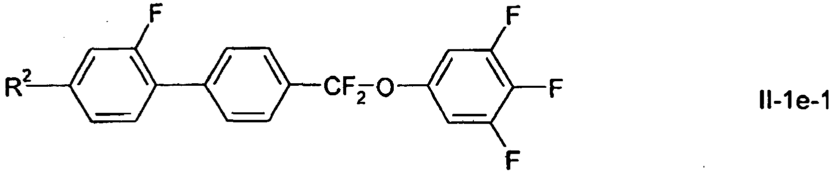 worin R² die oben angegebene Bedeutung besitzt.

Vorzugsweise enthalten die Medien eine oder mehrere Verbindungen der Formel II-2, die bevorzugt ausgewählt sind aus der Gruppe der Verbindungen der Formeln II-2a bis II-2j 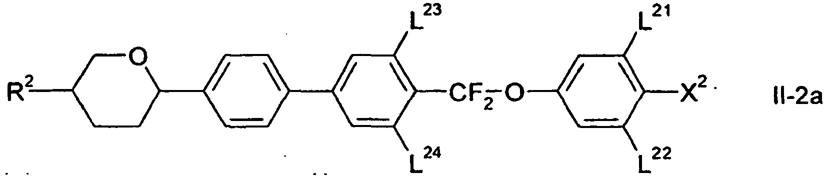 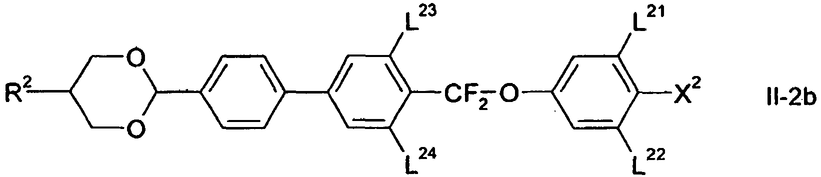 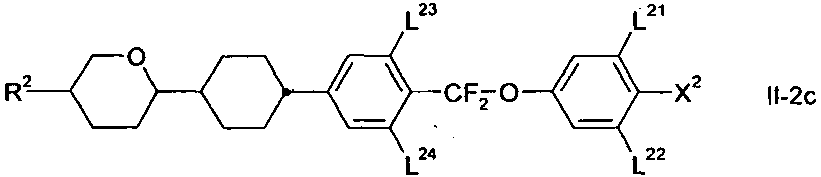 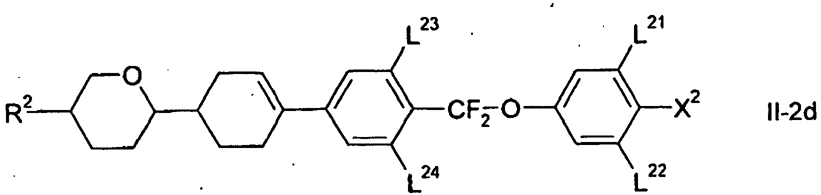 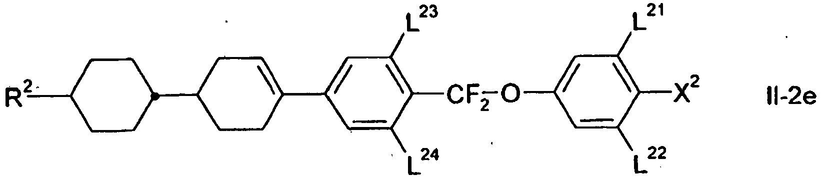 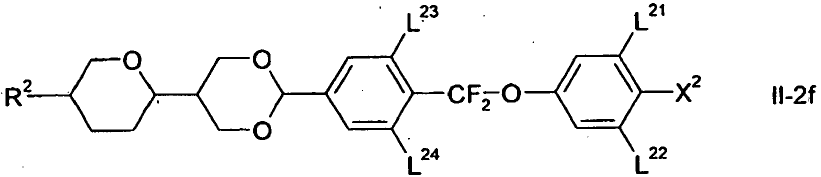 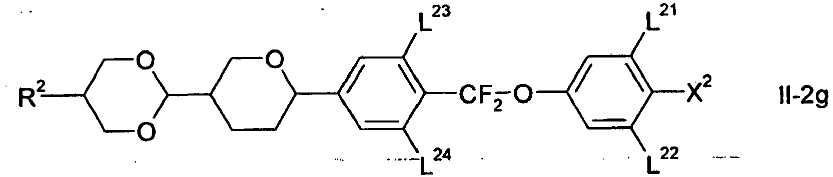 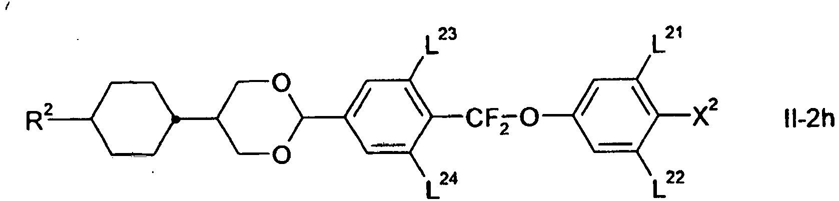 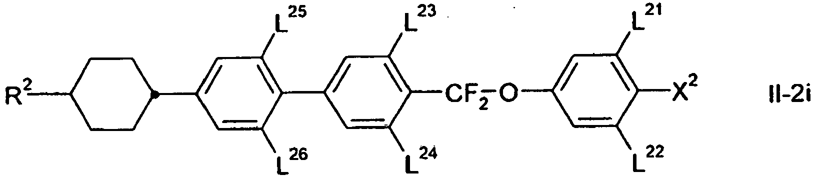 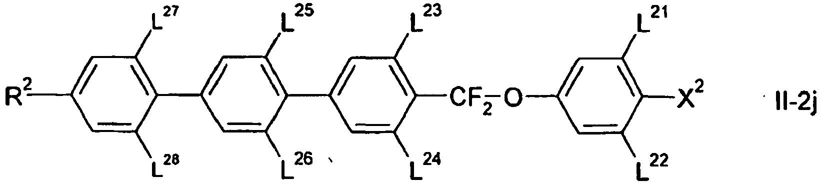 worin die Parameter die jeweiligen oben angegebenen Bedeutungen besitzen und L²⁵ bis L²⁸ unabhängig voneinander H oder F, bevorzugt L²⁷ und L²⁸ beide H, besonders bevorzugt L²⁶ H bedeuten und die anderen Parameter die jeweiligen oben gegebenen Bedeutungen haben und wobei die Verbindungen der Formel I ausgeschlossen sind.

Vorzugsweise enthalten die erfindungsgemäßen Medien eine oder mehrere Verbindungen ausgewählt aus der Gruppe der Verbindungen der Formeln II-2a bis II-2j, worin L²¹ und L²² beide F und/oder L²³ und L²⁴ beide F bedeuten und die anderen Parameter die jeweiligen oben gegebenen Bedeutungen haben.

In einer bevorzugten Ausführungsform enthalten die erfindungsgemäßen Medien eine oder mehrere Verbindungen ausgewählt aus der Gruppe der Verbindungen der Formeln II-2a bis II-2j, worin L²¹, L²², L²³ und L²⁴ alle F bedeuten und die anderen Parameter die jeweiligen oben gegebenen Bedeutungen haben.

Speziell bevorzugte Verbindungen der Formel II-2 sind die Verbindungen der folgenden Formeln 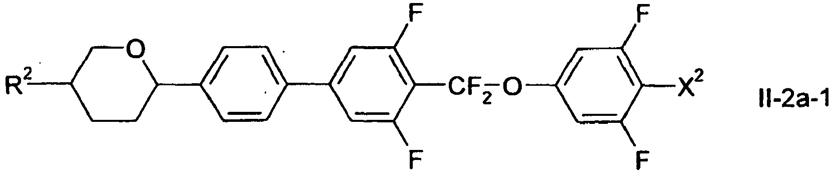 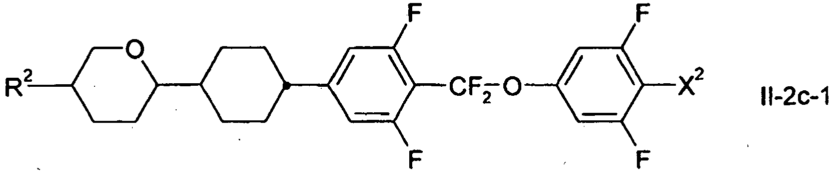 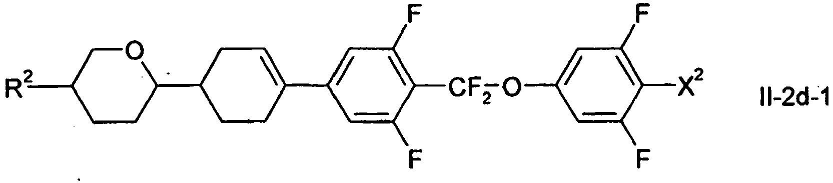 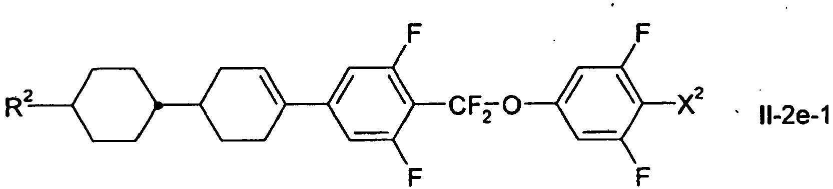 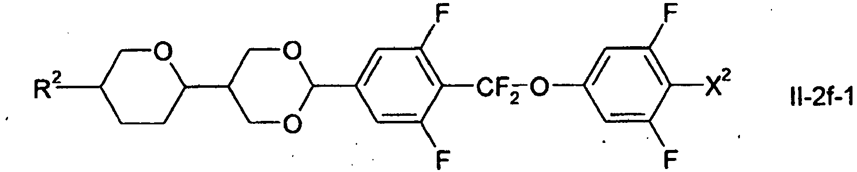 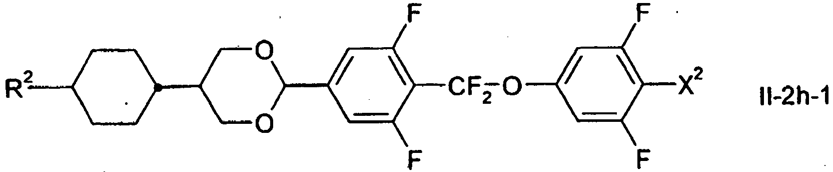 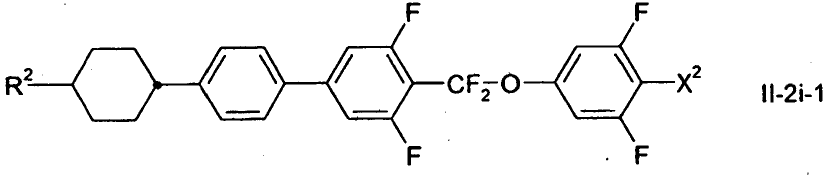 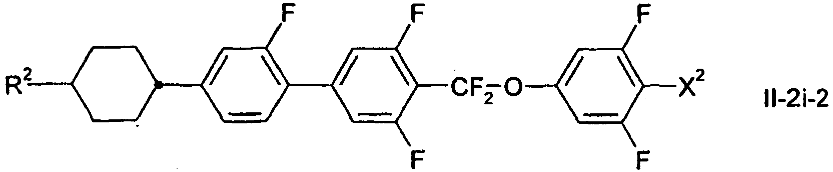 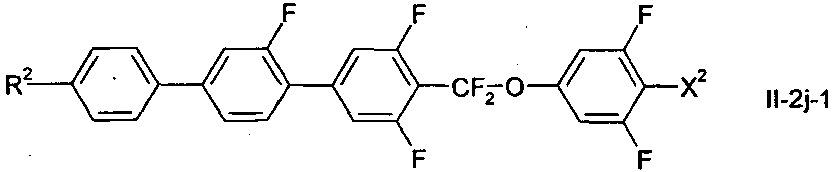 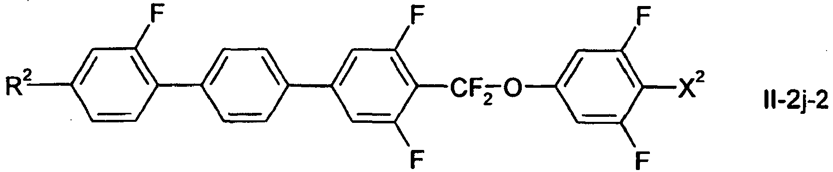 worin R² und X² die oben angegebenen Bedeutungen besitzen und X² bevorzugt F.

Vorzugsweise enthalten die erfindungsgemäßen Medien eine oder mehrere Verbindungen der Formel II-3, vorzugsweise ausgewählt aus der Gruppe der Verbindungen der Formeln II-3a bis II-3c 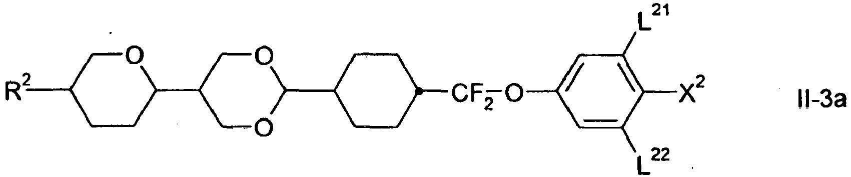 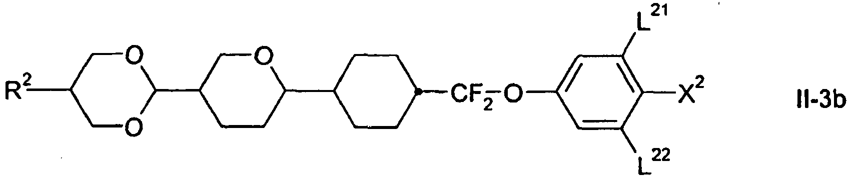 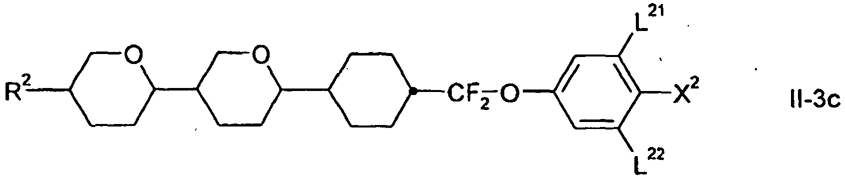 worin die Parameter die jeweiligen oben angegebenen Bedeutungen besitzen und L²¹ und L²² vorzugsweise beide F bedeuten.

In einer bevorzugten Ausführungsform enthalten die erfindungsgemäßen Medien eine oder mehrere Verbindungen der Forme II-4, bevorzugt der Formel II-4a 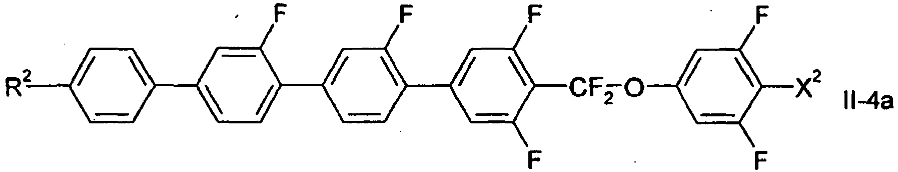 worin die Parameter die oben gegebene Bedeutung haben und X² bevorzugt F oder OCF₃, besonders bevorzugt F, bedeutet.

Vorzugsweise enthalten die erfindungsgemäßen Medien eine oder mehrere Verbindungen der Formel III-1, vorzugsweise ausgewählt aus der Gruppe der Verbindungen der Formeln III-1a und III-1b 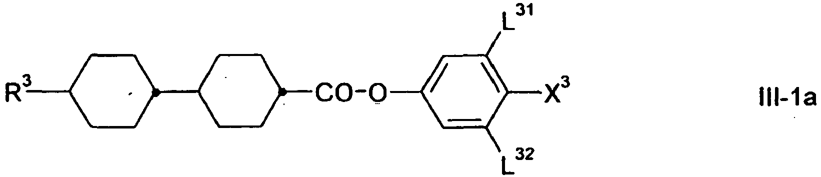 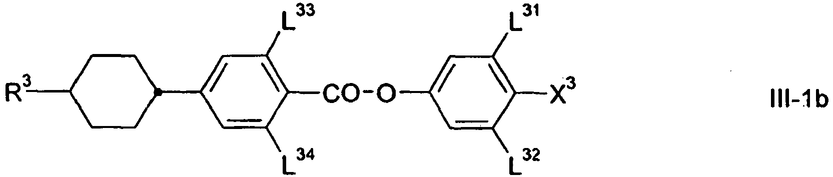 worin die Parameter die jeweiligen oben angegebenen Bedeutungen besitzen und die Parameter L³³ und L³⁴ unabhängig voneinander und von den anderen Parametern H oder F bedeuten.

Vorzugsweise enthalten die erfindungsgemäßen Medien eine oder mehrere Verbindungen der Formel III-1a, vorzugsweise ausgewählt aus der Gruppe der Verbindungen der Formeln III-1a-1 bis III-1a-6 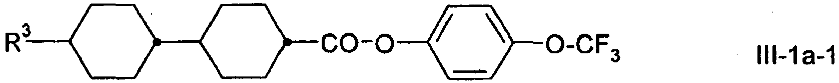 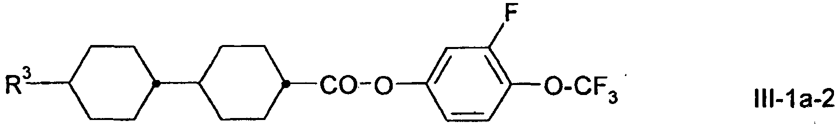 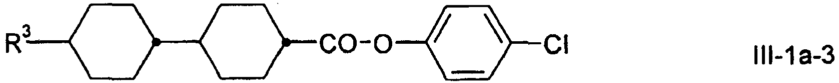 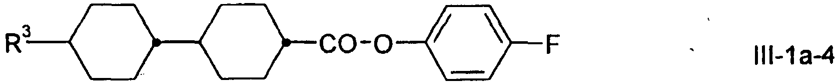 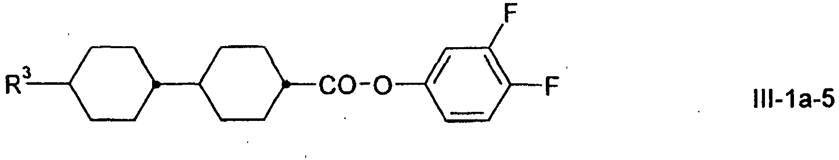 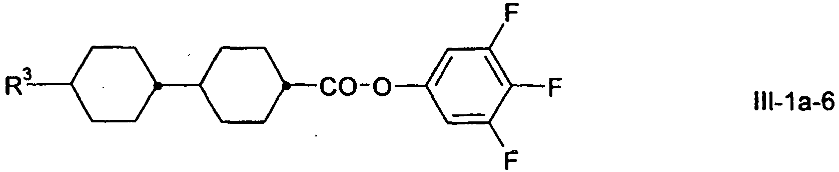 worin R³ die oben angegebene Bedeutung besitzt.

Vorzugsweise enthalten die erfindungsgemäßen Medien eine oder mehrere Verbindungen der Formel III-1b, vorzugsweise ausgewählt aus der Gruppe der Verbindungen der Formeln III-1b-1 bis III-1b-4, vorzugsweise der Formel III-1b-4 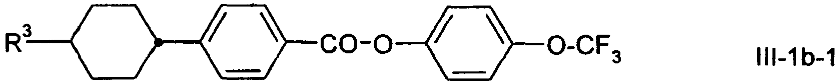 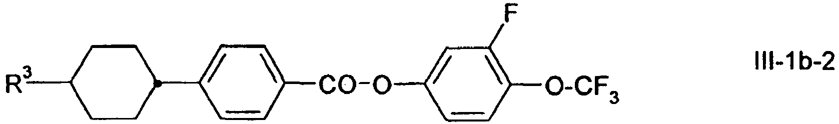 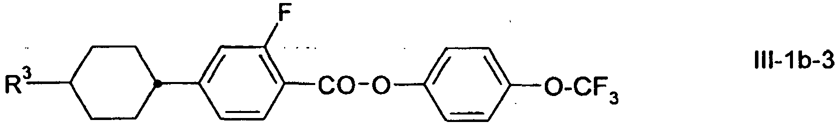 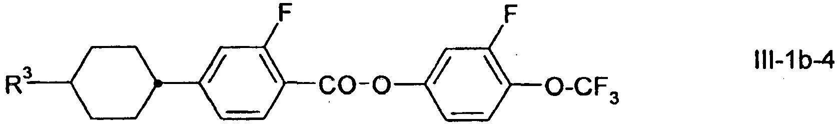 worin R³ die oben angegebene Bedeutung besitzt.

Vorzugsweise enthalten die erfindungsgemäßen Medien eine oder mehrere Verbindungen der Formel III-2, vorzugsweise ausgewählt aus der Gruppe der Verbindungen der Formeln III-2a bis III-2j 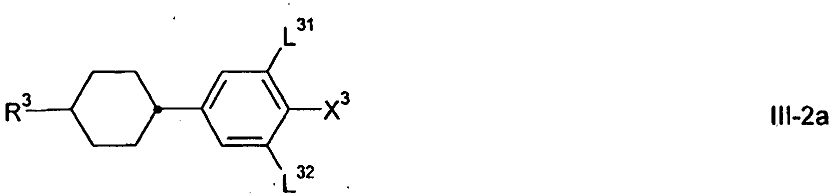 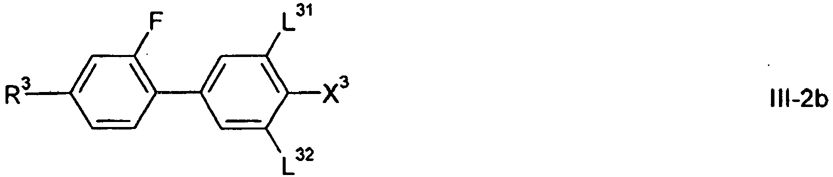 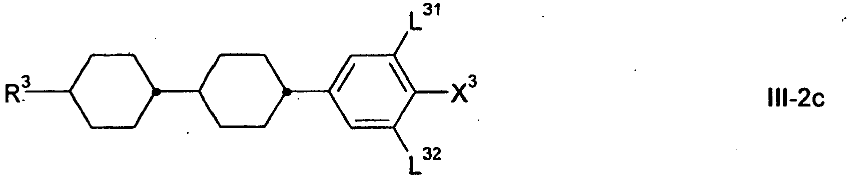 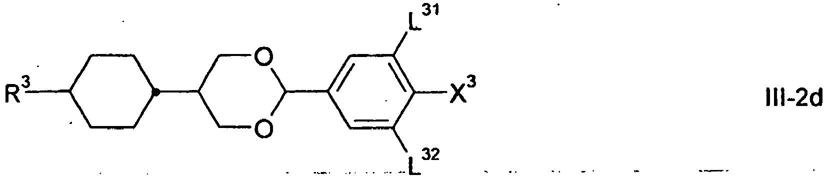 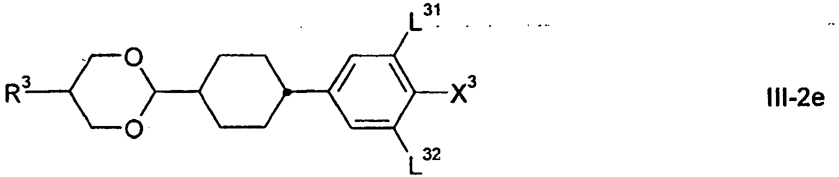 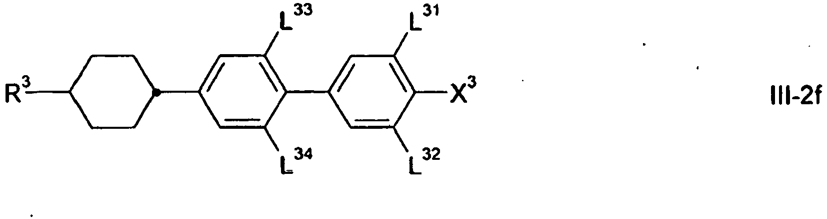 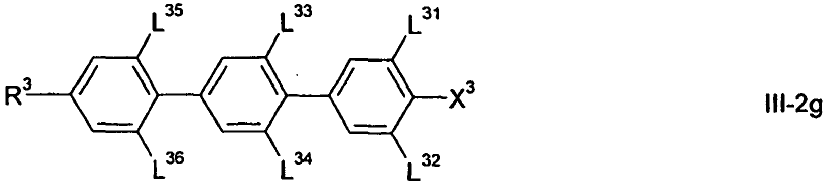 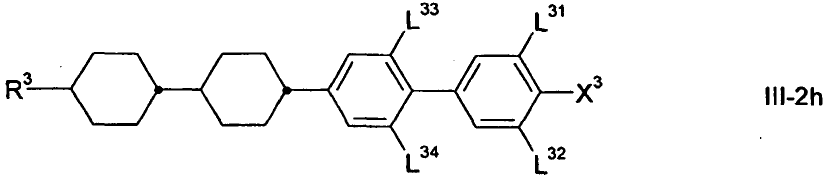 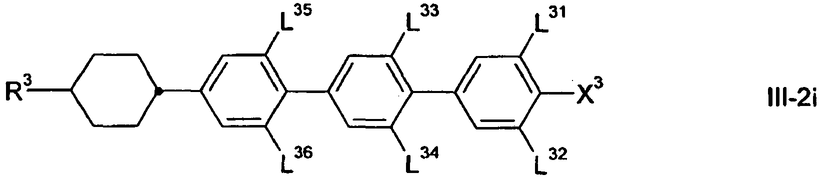 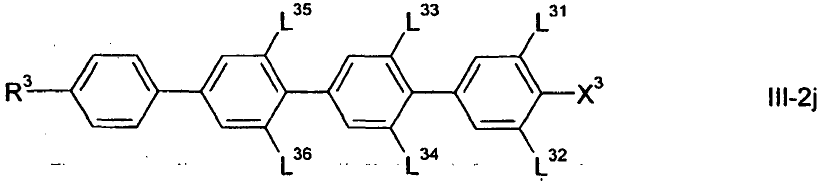 worin die Parameter die oben gegebene Bedeutung haben und bevorzugt worin die Parameter die jeweiligen oben angegebenen Bedeutungen besitzen und die Parameter L³³, L³⁴, L³⁵ und L³⁶ unabhängig voneinander und von den anderen Parametern H oder F bedeuten.

Vorzugsweise enthalten die erfindungsgemäßen Medien eine oder mehrere Verbindungen der Formel III-2a, vorzugsweise ausgewählt aus der Gruppe der Verbindungen der Formeln III-2a-1 bis III-2a-5 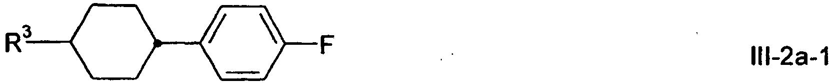 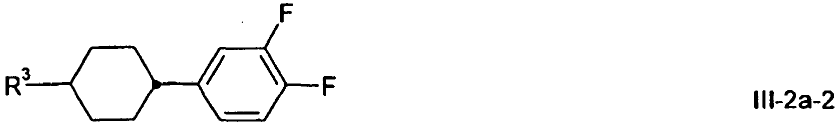 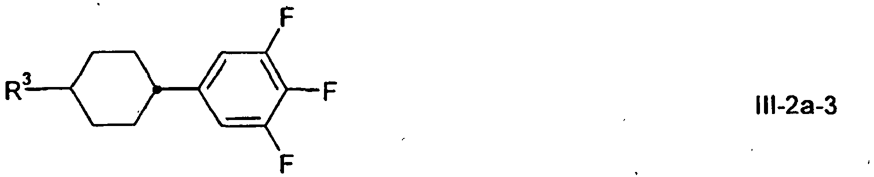 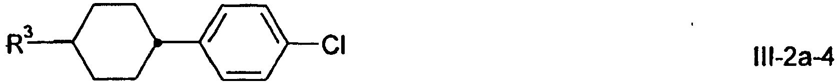 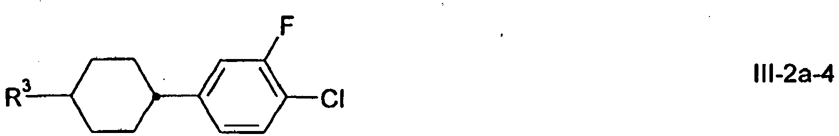 worin R³ die oben angegebene Bedeutung besitzt.

Vorzugsweise enthalten die erfindungsgemäßen Medien eine oder mehrere Verbindungen der Forme III-2b, vorzugsweise ausgewählt aus der Gruppe der Verbindungen der Formeln III-2b-1 und III-2b-2, vorzugsweise der Formel III-2b-2 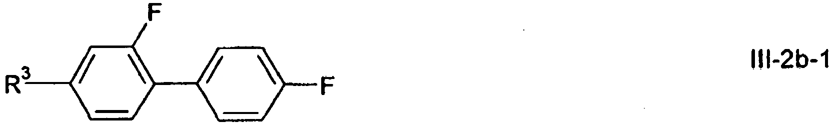 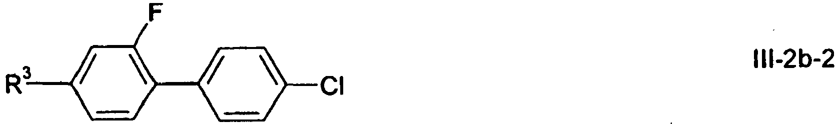 worin R³ die oben angegebene Bedeutung besitzt.

Vorzugsweise enthalten die erfindungsgemäßen Medien eine oder mehrere Verbindungen der Formel III-2c, vorzugsweise ausgewählt aus der Gruppe der Verbindungen der Formeln III-2c-1 bis III-2c-6 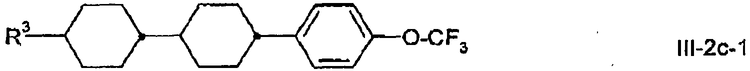 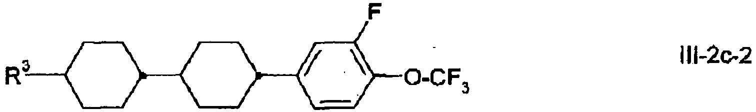 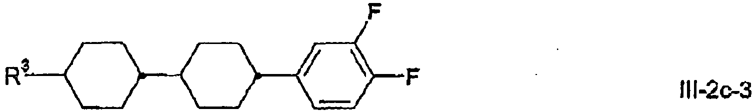 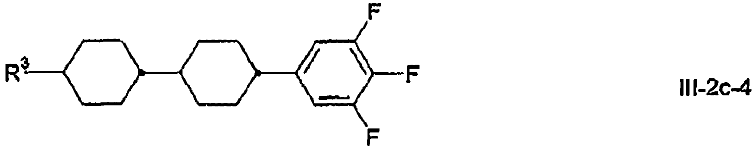 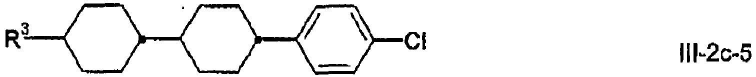 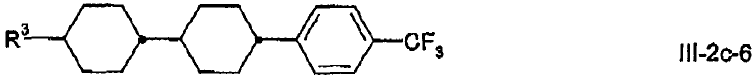 worin R³ die oben angegebene Bedeutung besitzt.

Vorzugsweise enthalten die erfindungsgemäßen Medien eine oder mehrere Verbindungen der Formel III-2f, vorzugsweise ausgewählt aus der Gruppe der Verbindungen der Formeln III-2f bis III-2f-5 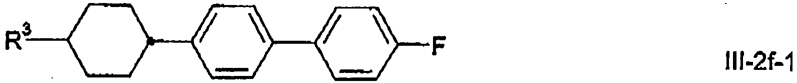 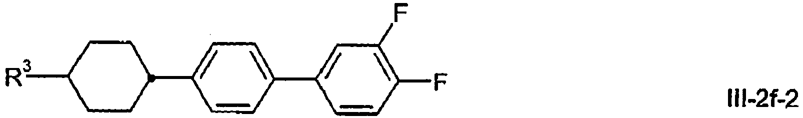 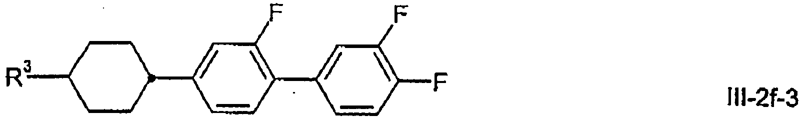 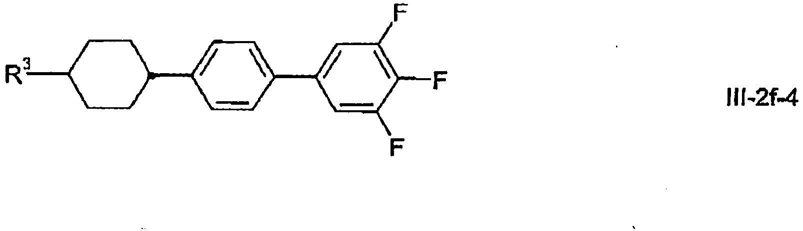 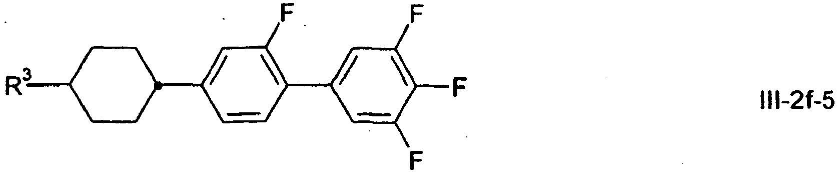 worin R³ die oben angegebene Bedeutung besitzt.

Vorzugsweise enthalten die erfindungsgemäßen Medien eine oder mehrere Verbindungen der Formel III-2g, vorzugsweise ausgewählt aus der Gruppe der Verbindungen der Formeln III-2g-1 bis III-2g-5 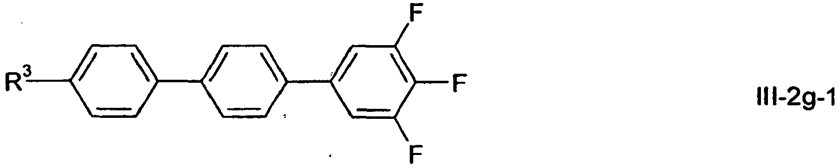 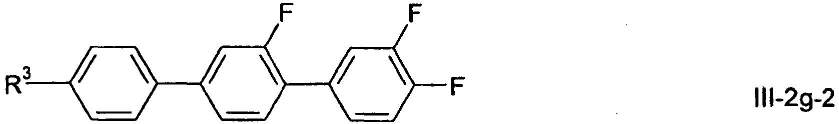 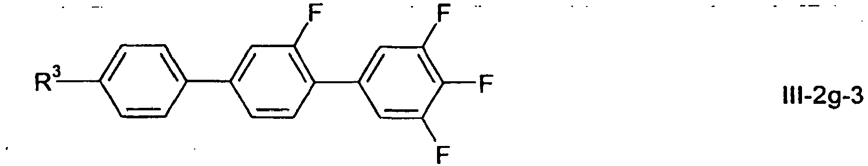 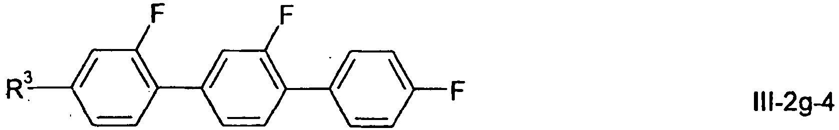 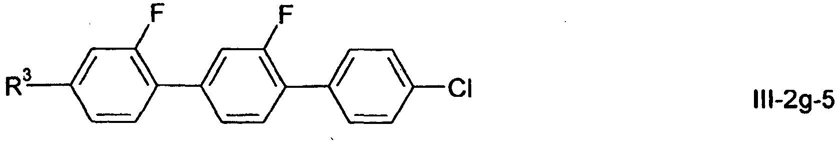 worin R³ die oben angegebene Bedeutung besitzt.

Vorzugsweise enthalten die erfindungsgemäßen Medien eine oder mehrere Verbindungen der Formel III-2h, bevorzugt ausgewählt aus der Gruppe der Verbindungen der Formeln III-2h-1 bis III-2h-3, bevorzugt der Formel III-2h-3 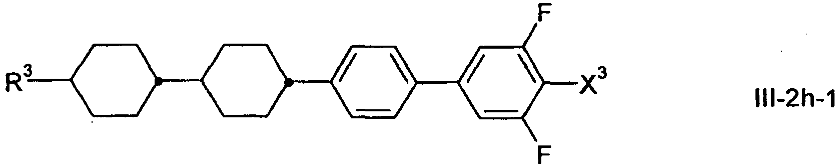 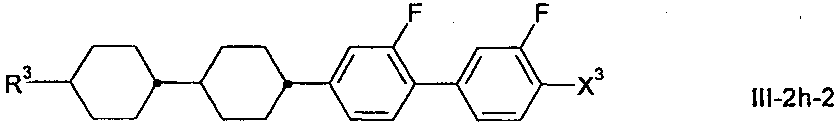 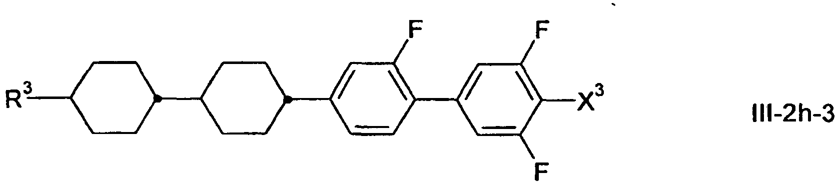 worin die Parameter die oben gegebene Bedeutung haben und bevorzugt X³ F bedeutet.

Vorzugsweise enthalten die erfindungsgemäßen Medien eine oder mehrere Verbindungen der Formel III-2, bevorzugt ausgewählt aus der Gruppe der Verbindungen der Formeln III-2i-1 und III-2i-2, bevorzugt der Formel III-2i-2 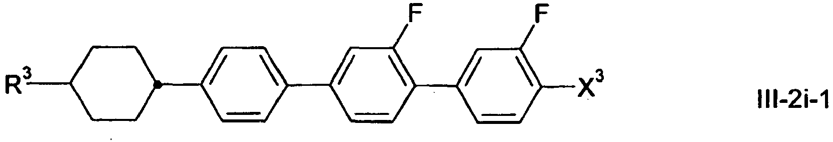 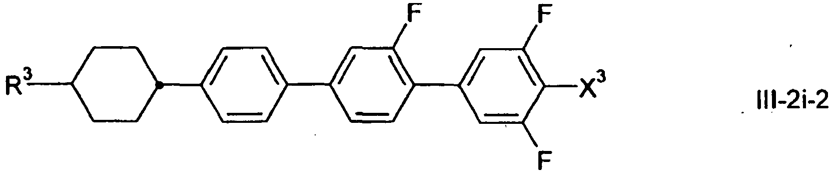 worin die Parameter die oben gegebene Bedeutung haben und bevorzugt X³ F bedeutet.

Vorzugsweise enthalten die erfindungsgemäßen Medien eine oder mehrere Verbindungen der Formel III-2j, bevorzugt ausgewählt aus der Gruppe der Verbindungen der Formeln III-2j-1 und III-2j-2, bevorzugt der Formel III-2j-1 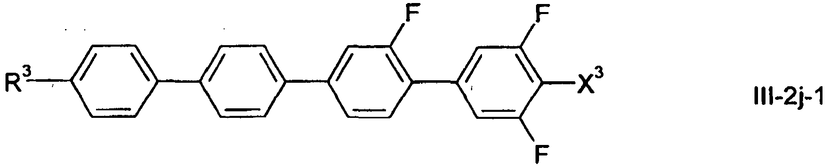 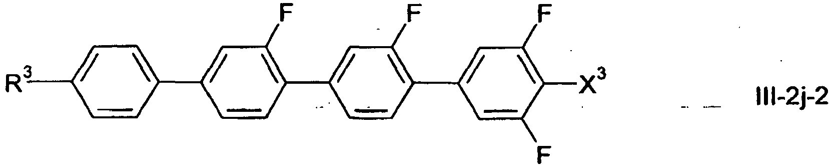 worin die Parameter die oben gegebene Bedeutung haben.

Alternativ oder zusätzlich zu den Verbindungen der Formeln III-1 und/oder III-2 können die Medien gemäß der vorliegenden Erfindung eine oder mehrere Verbindungen der Formel III-3 enthalten 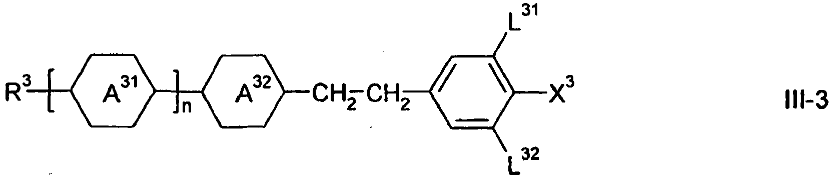 worin die Parameter die jeweiligen oben unter Formel III angegebenen Bedeutungen besitzen.

Diese Verbindungen sind vorzugsweise ausgewählt aus der Gruppe der Formeln III-3a und III-3b 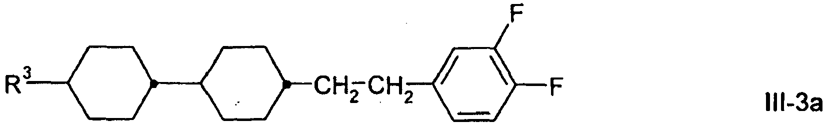 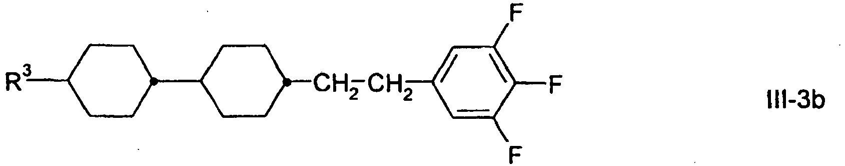 worin R³ die oben angegebene Bedeutung besitzt.

Vorzugsweise enthalten die flüssigkristallinen Medien gemäß der vorliegenden Erfindung eine dielektrisch neutrale Komponente, Komponente C. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vorzugsweise enthält diese Komponente eine oder mehrere, stärker bevorzugt besteht sie überwiegend, noch stärker bevorzugt besteht sie im Wesentlichen und ganz bevorzugt besteht sie vollständig aus dielektrisch neutralen Verbindungen mit einer dielektrischen Anisotropie im Bereich von -1,5 bis 3, der Formel IV.

Vorzugsweise enthält die dielektrisch neutrale Komponente, Komponente C, eine oder mehrere Verbindungen ausgewählt aus der Gruppe der Verbindungen der Formeln IV-1 bis IV-8 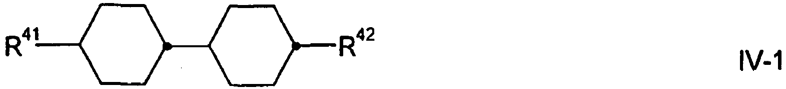 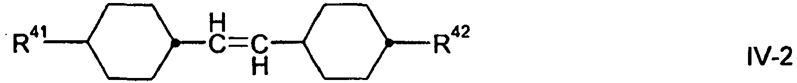 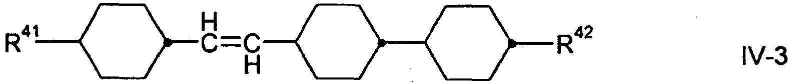 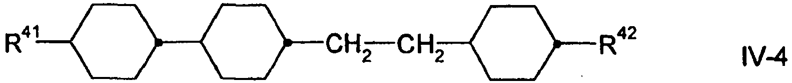 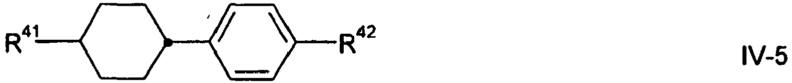 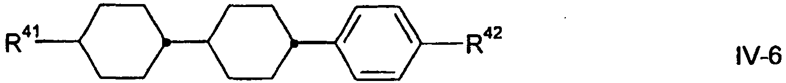 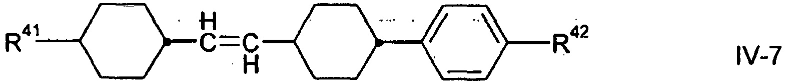 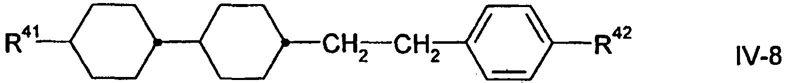 worin R⁴¹ und R⁴² die jeweiligen oben unter Formel IV angegebenen Bedeutungen besitzen und in den Formeln IV-1, IV-6 und IV-7 R⁴¹ vorzugsweise Alkyl oder Alkenyl, vorzugsweise Alkenyl, und R⁴² vorzugsweise Alkyl oder Alkenyl, vorzugsweise Alkyl bedeutet, in Formel IV-2 R⁴¹ und R⁴² vorzugsweise Alkyl bedeuten, in Formel IV-5 R⁴¹ vorzugsweise Alkyl oder Alkenyl, stärker bevorzugt Alkyl, und R⁴² vorzugsweise Alkyl, Alkenyl oder Alkoxy, stärker bevorzugt Alkenyl oder Alkoxy und in Formeln IV-4 und IV-8 R⁴¹ vorzugsweise Alkyl und R⁴² vorzugsweise Alkyl oder Alkoxy, stärker bevorzugt Alkoxy, bedeutet.

Vorzugsweise enthält die dielektrisch neutrale Komponente, Komponente C, eine oder mehrere Verbindungen ausgewählt aus der Gruppe der Verbindungen der Formeln IV-1, IV-5, IV-6 und IV-7, vorzugsweise eine oder mehrere Verbindungen der Formel IV-1 und eine oder mehrere Verbindungen ausgewählt aus der Gruppe der Formeln IV-5 und IV-6, stärker bevorzugt jeweils eine oder mehrere Verbindungen der Formeln IV-1, IV-5 und IV-6 und ganz bevorzugt jeweils eine oder mehrere Verbindungen Formeln IV-1, IV-5, IV-6 und IV-7.

In einer bevorzugten Ausführungsform enthalten die erfindungsgemäßen Medien eine oder mehrere Verbindungen der Formel IV-4, stärker bevorzugt ausgewählt aus ihren jeweiligen Unterformeln der Formel CP-V-n und/ oder CP-nV-m und/oder CP-Vn-m, stärker bevorzugt der Formel CP-V-n und/oder CP-V2-n und ganz bevorzugt ausgewählt aus der Gruppe der Formeln CP-V-1 und CP-V2-1. Die Definitionen dieser Abkürzungen (Akronyme) sind unten in Tabelle D angegeben, bzw. aus den Tabellen A bis C zu ersehen.

In einer bevorzugten Ausführungsform enthalten die erfindungsgemäßen Medien eine oder mehrere Verbindungen der Formel IV-6, stärker bevorzugt ausgewählt aus ihren jeweiligen Unterformeln der Formel CCP-V-n und/ oder CCP-nV-m und/oder CCP-Vn-m, stärker bevorzugt der Formel CCP-V-n und/oder CCP-V2-n und ganz bevorzugt ausgewählt aus der Gruppe der Formeln CCP-V-1 und CCP-V2-1. Die Definitionen dieser Abkürzungen (Akronyme) sind unten in Tabelle D angegeben, bzw. aus den Tabellen A bis C zu ersehen.

In einer ebenfalls bevorzugten Ausführungsform enthalten die erfindungsgemäßen Medien eine oder mehrere Verbindungen der Formel IV-1, stärker bevorzugt ausgewählt aus ihren jeweiligen Unterformeln, den Formel CC-n-m, CC-n-V, CC-n-Vm, CC-V-V, CC-V-Vn und/oder CC-nV-Vm, stärker bevorzugt der Formeln CC-n-V und/ oder CC-n-Vm und ganz bevorzugt ausgewählt aus der Gruppe der Formeln CC-3-V, CC-4-V, CC-5-V CC-3-V1, CC-4V1, CC-5-V1, CC-3-V2 und CC-V-V1. Die Definitionen dieser Abkürzungen (Akronyme) sind ebenfalls unten in Tabelle D angegeben, bzw. aus den Tabellen A bis C zu ersehen.

In einer weiteren bevorzugten Ausführungsform der vorliegenden Erfindung, bei der es sich um dieselbe wie die vorhergehende oder um eine andere handeln kann, enthalten die Flüssigkristallmischungen gemäß der vorliegenden Erfindung die Komponente C, die Verbindungen der Formel IV ausgewählt aus der Gruppe der Verbindungen der Formeln IV₋1 bis IV-8 wie oben gezeigt und gegebenenfalls der Formeln IV-9 bis IV-15 enthält, vorzugsweise überwiegend daraus besteht und ganz bevorzugt vollständig daraus besteht: 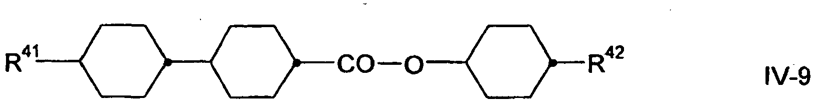 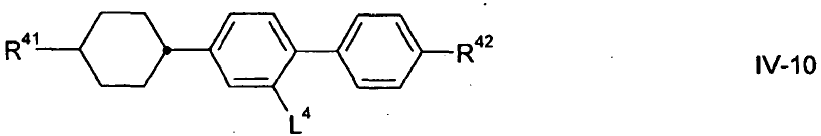 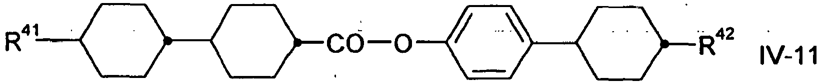 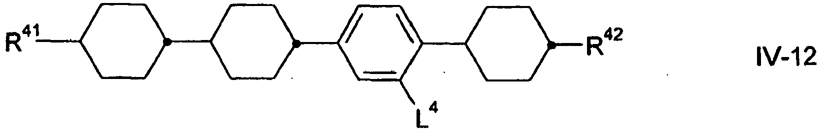 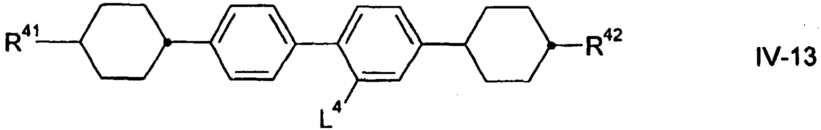 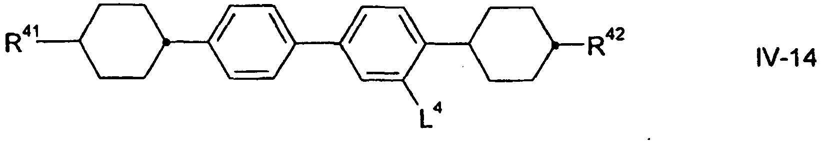 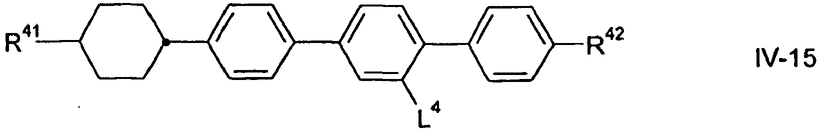 worin
- R⁴¹ und R⁴²: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten und
- L⁴: H oder F bedeutet.

In einer bevorzugten Ausführungsform enthalten die erfindungsgemäßen Medien eine oder mehrere Verbindungen der Formel IV-10, stärker bevorzugt ausgewählt aus ihren jeweiligen Unterformeln der Formel CPP-3-2, CPP-5-2 und CGP-3-2, stärker bevorzugt der Formel CPP-3-2 und/oder CGP-3-2 und ganz besonders bevorzugt der Formel CPP-3-2. Die Definitionen dieser Abkürzungen (Akronyme) sind unten in Tabelle D angegeben, bzw. aus den Tabellen A bis C zu ersehen.

Vorzugsweise enthalten die flüssigkristallinen Medien gemäß der vorliegenden Erfindung eine oder mehrere Verbindungen der Formel V 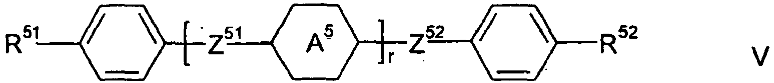 worin
- R⁵¹ und R⁵²: unabhangig voneinander die oben unter Formel II für R² angegebene Bedeutung besitzen, vorzugsweise R⁵¹ Alkyl und R⁵² Alkyl oder Alkenyl bedeutet, 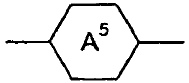 und bei zweifachem Auftreten bei jedem Auftreten unabhängig voneinander 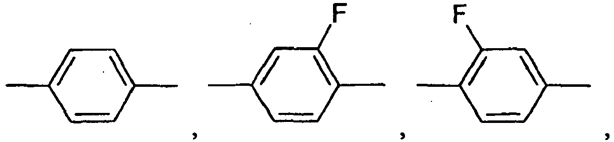 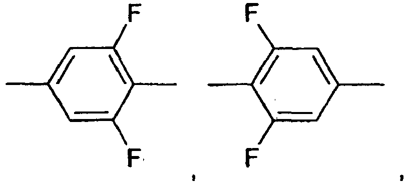 oder 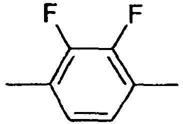 bedeuten,
vorzugsweise einer oder mehrere von 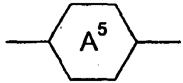 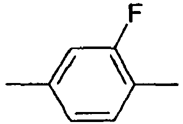 bedeuten,
- Z⁵¹ und Z⁵²: unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten, und
- r: 0, 1 oder 2, vorzugsweise 0 oder 1, besonders bevorzugt 1, bedeutet.

Die Verbindungen der Formel V sind bevorzugt dielektrisch neutrale Verbindungen mit einer dielektrischen Anisotropie im Bereich von -1,5 bis 3.

Vorzugsweise enthalten die erfindungsgemäßen Medien eine oder mehrere Verbindungen ausgewählt aus der Gruppe der Verbindungen der Formeln V-1 und V-2 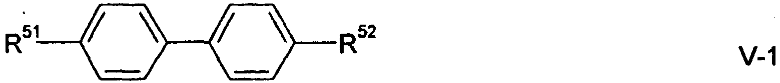 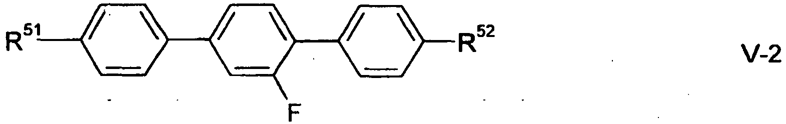 worin R⁵¹ und R⁵² die jeweiligen oben unter Formel V angegebenen Bedeutungen besitzen und R⁵¹ vorzugsweise Alkyl bedeutet und in Formel V-1 R⁵² vorzugsweise Alkenyl, vorzugsweise -(CH₂)₂-CH=CH-CH₃, und in Formel V-2 R⁵² vorzugsweise Alkyl oder Alkenyl, vorzugsweise -CH=CH₂, -(CH₂)₂-CH=CH₂ oder -(CH₂)₂-CH=CH-CH₃ bedeutet. Vorzugsweise enthalten die erfindungsgemäßen Medien eine oder mehrere Verbindungen ausgewählt aus der Gruppe der Verbindungen der Formeln V-1 und V-2, worin R⁵¹ vorzugsweise n-Alkyl bedeutet und in Formel V-1 R⁵² vorzugsweise Alkenyl und in Formel V-2 R⁵² vorzugsweise n-Alkyl bedeutet.

In einer bevorzugten Ausführungsform enthalten die erfindungsgemäßen Medien eine oder mehrere Verbindungen der Formel V-1, stärker bevorzugt ihrer Unterformel PP-n-2Vm, noch stärker bevorzugt der Formel PP-1-2V1. Die Definitionen dieser Abkürzungen (Akronyme) sind unten in Tabelle D angegeben, bzw. aus den Tabellen A bis C zu ersehen.

In einer bevorzugten Ausführungsform enthalten die erfindungsgemäßen Medien eine oder mehrere Verbindungen der Formel V-2, stärker bevorzugt ihrer Unterformeln PGP-n-m, PGP-n-V, PGP-n-2Vm, PGP-n-2V und PGP-n-2Vm, noch stärker bevorzugt ihrer Unterformeln PGP-3-m, PGP-n-2V und PGP-n-V1, ganz bevorzugt ausgewählt aus den Formeln PGP-3-2, PGP-3-3, PGP-3-4, PGP-3-5, PGP-1-2V, PGP-2-2V und PGP-3-2V. Die Definitionen dieser Abkürzungen (Akronyme) sind ebenfalls unten in Tabelle D angegeben, bzw. aus den Tabellen A bis C zu ersehen.

Alternativ oder zusätzlich zu den Verbindungen der Formeln II und/oder III können die Medien gemäß der vorliegenden Erfindung eine oder mehrere dielektrisch positive Verbindungen der Formel VI enthalten 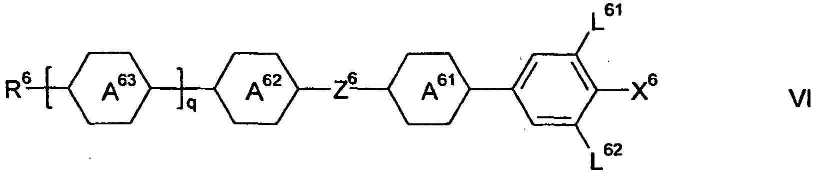 worin
- R⁶: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet, 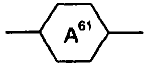 bis 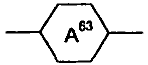 unabhängig voneinander 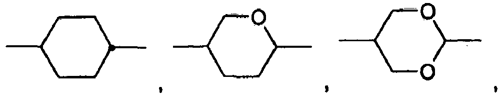 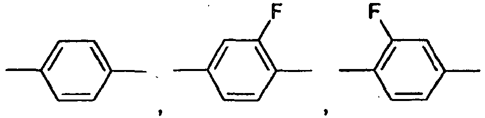 oder 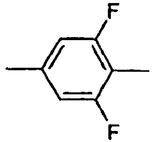 bedeuten,
- L⁶¹ und L⁶²: unabhängig voneinander H oder F bedeuten, vorzugsweise L⁶¹ F bedeutet, und
- X⁶: Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃ bedeutet,
- Z⁶: -CH₂CH₂-, -CF₂CF₂-, -COO-, *trans-* -CH=CH-, *trans-* -CF=CF-, -CH₂O- oder -CF₂O-, vorzugsweise -CH₂CH₂-, -COO- oder *trans-* -CH=CH- und ganz bevorzugt -COO- oder *trans-* -CH=CH- bedeutet und
- q: 0 oder 1 bedeutet.

Vorzugsweise enthalten die Medien gemäß der vorliegenden Erfindung eine oder mehrere Verbindungen der Formel VI, vorzugsweise ausgewählt aus der Gruppe der Verbindungen der Formeln VI-1 und VI-2 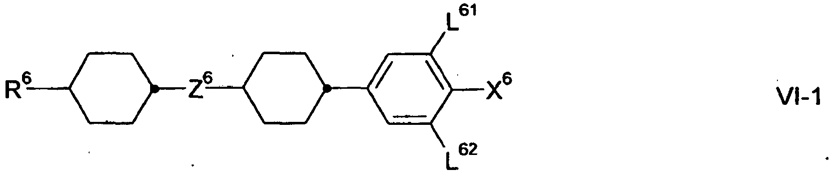 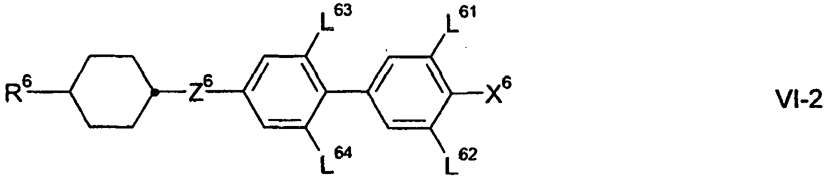 worin die Parameter die jeweiligen. oben angegebenen Bedeutungen besitzen und die Parameter L⁶³ und L⁶⁴ unabhängig voneinander und von den anderen Parametern H oder F bedeuten und Z⁶ vorzugsweise -CH₂-CH₂- bedeutet.

Vorzugsweise sind die Verbindungen der Formel VI-1 ausgewählt aus der Gruppe der Verbindungen der Formeln VI-1a und VI-1b 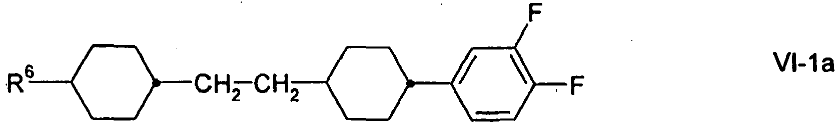 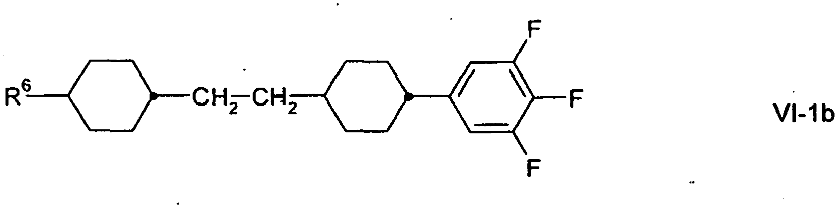 worin R⁶ die oben angegebene Bedeutung besitzt.

Vorzugsweise sind die Verbindungen der Formel VI-2 ausgewählt aus der Gruppe der Verbindungen der Formeln VI-2a bis VI-2d 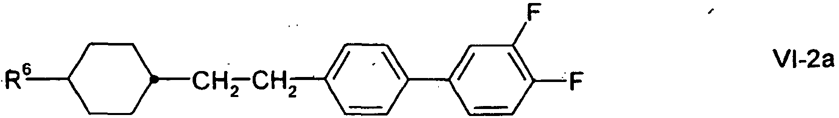 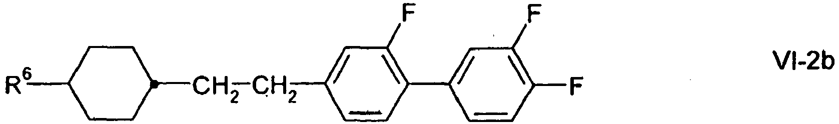 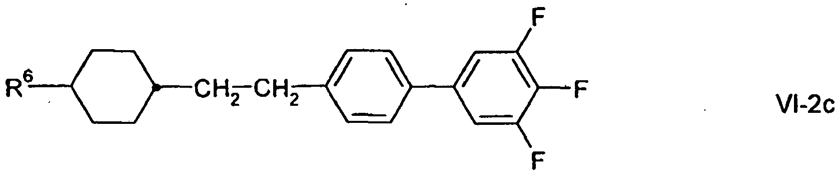 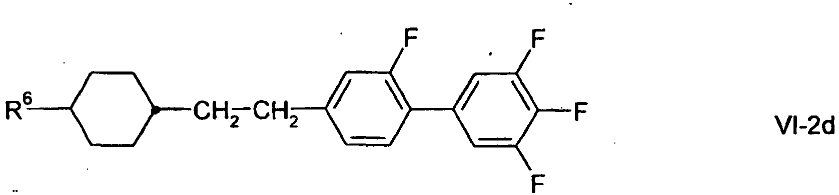 worin R⁶ die oben angegebene Bedeutung besitzt. Zusätzlich können die Flüssigkristallmedien gemäß der vorliegenden Erfindung eine oder mehrere Verbindungen der Formel VII 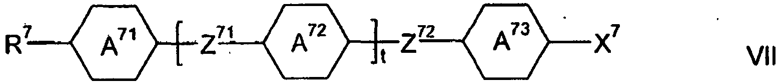 worin
- R⁷: die oben unter Formel II für R² angegebene Bedeutung besitzt,
einer der Ringe von 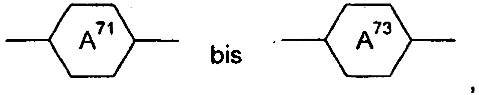 der vorhanden ist, 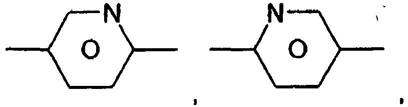 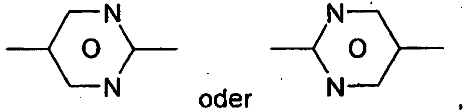 vorzugsweise 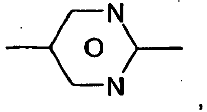 vorzugsweise 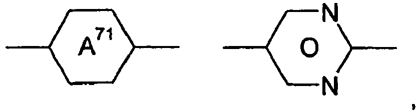 und die anderen dieselbe Bedeutung besitzen oder unabhängig voneinander 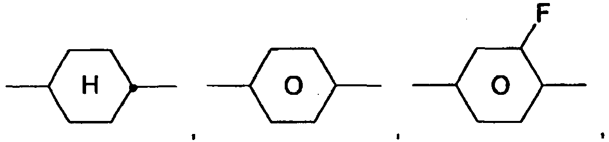 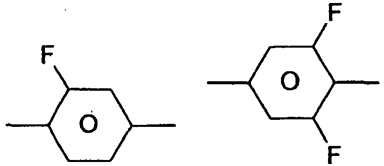 oder 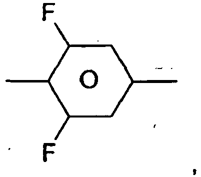 vorzugsweise 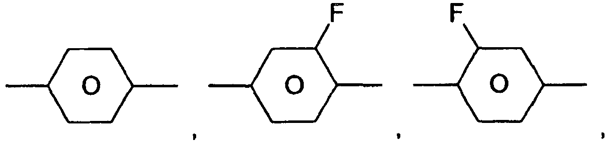 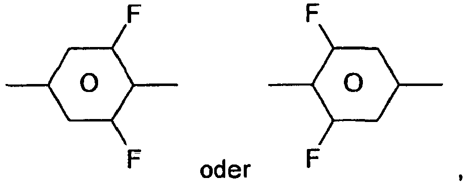
- Z⁷¹ und Z⁷²: unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfachbindung,
- t: 0, 1 oder 2, vorzugsweise 0 oder 1, stärker bevorzugt 1 bedeutet, und
- X⁷: die oben unter Formel II für X² angegebene Bedeutung besitzt oder alternativ unabhängig von R⁷ eine der für R⁷ angegebenen Bedeutungen besitzen kann,
enthalten.

Die Verbindungen der Formel VII sind bevorzugt dielektrisch positive Verbindungen.

Zusätzlich können die Flüssigkristallmedien gemäß der vorliegenden Erfindung eine oder mehrere Verbindungen der Formel VIII 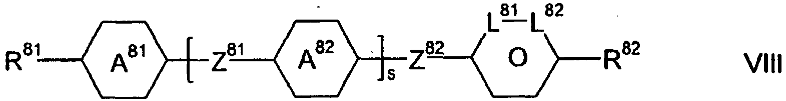 worin
- R⁸¹ und R⁸²: unabhängig voneinander die oben unter Formel II für R² angegebene Bedeutung besitzen und 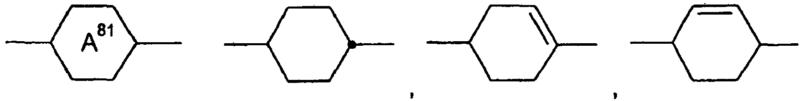 oder 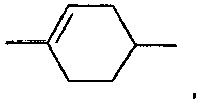 vorzugsweise 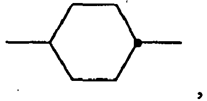 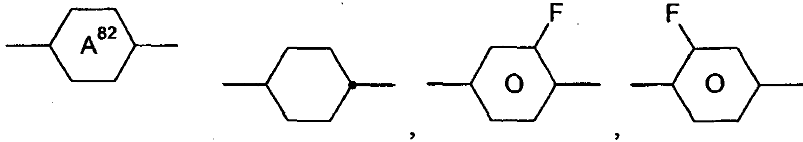 oder 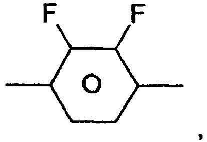
- Z⁸¹ und Z⁸²: unabhängig voneinander -CH₂CH₂-, -COO-, *trans-* -CH=CH-, *trans-* -CF=CF-, -CH₂O-, -CF₂O- oder eine Einfachbindung, vorzugsweise eines oder mehrere von ihnen eine Einfachbindung und ganz bevorzugt beide eine Einfachbindung,
- L⁸¹ und L⁸²: unabhängig voneinander C-F oder N, vorzugsweise einer von L⁸¹ und L⁸² oder beide C-F und ganz bevorzugt beide C-F und
- s: 0 oder 1 bedeutet, enthalten.

Die Verbindungen der Formel VIII sind bevorzugt dielektrisch negative Verbindungen.

Vorzugsweise enthalten die erfindungsgemäßen Medien eine oder mehrere Verbindungen der Formel VIII, vorzugsweise ausgewählt aus der Gruppe der Verbindungen der Formeln VIII-1 bis VIII-3 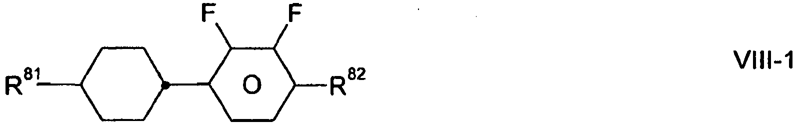 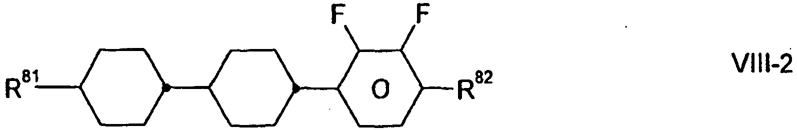 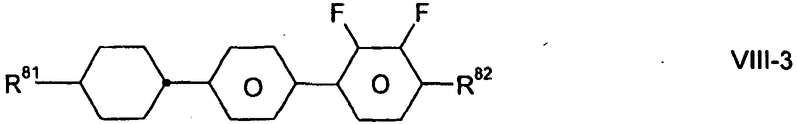 worin
- R⁸¹ und R⁸²: die jeweiligen oben unter Formel VIII angegebenen Bedeutungen besitzen.

In den Formeln VIII-1 bis VIII-3 bedeutet R⁸¹ vorzugsweise n-Alkyl oder 1-E-Alkenyl und R⁸² vorzugsweise n-Alkyl oder Alkoxy.

Vorzugsweise enthalten die flüssigkristallinen Medien gemäß der vorliegenden Erfindung eine oder mehrere Verbindungen ausgewählt aus der Gruppe der Verbindungen der Formeln I bis VIII, vorzugsweise der Formeln I bis VII und stärker bevorzugt der Formeln I und II und/oder III und/oder IV und/oder VI. Besonders bevorzugt bestehen sie überwiegend, noch stärker bevorzugt bestehen sie im Wesentlichen und ganz bevorzugt bestehen sie vollständig daraus.

In dieser Anmeldung bedeutet "enthalten" im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

"Überwiegend bestehen aus" bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

"Im Wesentlichen bestehen aus" bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

"Nahezu vollständig bestehen aus", bzw. "vollständig bestehen aus" bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 70°C oder mehr, stärker bevorzugt von 75°C oder mehr, besonders bevorzugt von 80°C oder mehr und ganz besonders bevorzugt von 85°C oder mehr, auf.

Vorzugsweise erstreckt sich die nematische Phase der erfindungsgemäßen Medien mindestens von 0°C oder weniger bis 70°C oder mehr, stärker bevorzugt mindestens von -20°C oder weniger bis 75°C oder mehr, ganz bevorzugt mindestens von -30°C oder weniger bis 75°C oder mehr und insbesondere mindestens von -40°C oder weniger bis 80°C oder mehr.

Das Δε des Flüssigkristallmediums gemäß der Erfindung bei 1 kHz und 20 °C beträgt vorzugsweise 2 oder mehr, stärker bevorzugt 4 oder mehr und ganz bevorzugt 6 oder mehr. Insbesondere beträgt Δε 20 oder weniger.

Das Δn der Flüssigkristallmedien gemäß der vorliegenden Erfindung liegt bei 589 nm (Na^{D}) und 20 °C vorzugsweise im Bereich von 0,070 oder mehr bis 0,150 oder weniger, stärker bevorzugt im Bereich von 0,080 oder mehr bis 0,140 oder weniger, noch stärker bevorzugt im Bereich von 0,090 oder mehr bis 0,135 oder weniger und ganz besonders bevorzugt im Bereich von 0,100 oder mehr bis 0,130 oder weniger.

In einer ersten bevorzugten Ausführungsform der vorliegenden Anmeldung beträgt das Δn der Flüssigkristallmedien gemäß der vorliegenden Erfindung vorzugsweise 0,080 oder mehr bis 0,120 oder weniger, stärker bevorzugt im Bereich von 0,090 oder mehr bis 0,110 oder weniger und ganz besonderes bevorzugt im Bereich von 0,095 oder mehr bis 0,105 oder weniger, während Δε vorzugsweise im Bereich von 6 oder mehr bis 11 oder weniger, vorzugsweise im Bereich von 7 oder mehr bis 10 oder weniger und besonders bevorzugt im Bereich von 8 oder mehr bis 9 oder weniger liegt.

In dieser Ausführungsform erstreckt sich die nematische Phase der erfindungsgemäßen Medien vorzugsweise mindestens von -20°C oder weniger bis 70°C oder mehr, stärker bevorzugt mindestens von -20°C oder weniger bis 70°C oder mehr, ganz bevorzugt mindestens von -30°C oder weniger bis 70°C oder mehr und insbesondere mindestens von -40°C oder weniger bis 70°C oder mehr.

In einer zweiten bevorzugten Ausführungsform der vorliegenden Anmeldung beträgt das Δn der Flüssigkristallmedien gemäß der vorliegenden Erfindung vorzugsweise 0,100 oder mehr bis 0,140 oder weniger, stärker bevorzugt im Bereich von 0,110 oder mehr bis 0,130 oder weniger und ganz besonderes bevorzugt im Bereich von 0,115 oder mehr bis 0,125 oder weniger, während Δε vorzugsweise im Bereich von 7 oder mehr bis 13 oder weniger, vorzugsweise im Bereich von 9 oder mehr bis 12 oder weniger und besonders bevorzugt im Bereich von 10 oder mehr bis 11 oder weniger liegt.

In dieser Ausführungsform erstreckt sich die nematische Phase der erfindungsgemäßen Medien vorzugsweise mindestens von -20°C oder weniger bis 80°C oder mehr, stärker bevorzugt mindestens von -20°C oder weniger bis 85°C oder mehr, ganz bevorzugt mindestens von -30°C oder weniger bis 80°C oder mehr und insbesondere mindestens von -40°C oder weniger bis 85°C oder mehr.

Gemäß der vorliegenden Erfindung werden die Verbindungen der Formel I zusammen vorzugsweise in den Medien in einer Gesamtkonzentration von 1 % bis 50 %, stärker bevorzugt von 1 % bis 30 %, stärker bevorzugt von 2 % bis 30 %, stärker bevorzugt von 3 % bis 30 % und ganz bevorzugt von 5 % bis 25 % der Gesamtmischung verwendet.

Die Verbindungen ausgewählt aus der Gruppe der Formeln II und III werden vorzugsweise in einer Gesamtkonzentration von 2 % bis 60 %, stärker bevorzugt von 3 % bis 35 %, noch stärker bevorzugt von 4 % bis 20 % und ganz bevorzugt von 5 % bis 15 % der Gesamtmischung verwendet.

Die Verbindungen der Formel IV werden vorzugsweise in einer Gesamtkonzentration von 5 % bis 70 %, stärker bevorzugt von 20 % bis 65 %, noch stärker bevorzugt von 30 % bis 60 % und ganz bevorzugt von 40 % bis 55 % der Gesamtmischung verwendet.

Die Verbindungen der Formel V werden vorzugsweise in einer Gesamtkonzentration von 0 % bis 30 %, stärker bevorzugt von 0 % bis 15 % und ganz bevorzugt von 1 % bis 10 % der Gesamtmischung verwendet.

Die Verbindungen der Formel VI werden vorzugsweise in einer Gesamtkonzentration von 0 % bis 50 %, stärker bevorzugt von 1 % bis 40 %, noch stärker bevorzugt von 5 % bis 30 % und ganz bevorzugt von 10 % bis 20 % der Gesamtmischung verwendet.

Gegebenenfalls können die erfindungsgemäßen Medien weitere Flüssigkristallverbindungen enthalten, um die physikalischen Eigenschaften einzustellen. Solche Verbindungen sind dem Fachmann bekannt. Ihre Konzentration in den Medien gemäß der vorliegenden Erfindung beträgt vorzugsweise 0 % bis 30 %, stärker bevorzugt 0,1 % bis 20 % und ganz bevorzugt 1 % bis 15 %.

Die Konzentration der Verbindung der Formel CC-3-V in den erfindungsgemäßen die Medien kann in einer bevorzugten Ausführungsform 50 % bis 65 % betragen, besonders bevorzugt 55 % bis 60 %.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Verbindungen der Formeln I bis VII, vorzugsweise ausgewählt aus der Gruppe der Verbindungen der Formeln der Formeln I bis VI, besonders bevorzugt der Formeln I bis V, insbesondere der Formeln I, II, III, IV, V, und VII und ganz besonders bevorzugt der Formeln I, II, III, IV und V. Vorzugsweise bestehen sie überwiegend daraus und ganz bevorzugt bestehen sie nahezu vollständig daraus. In einer bevorzugten Ausführungsform enthalten die Flüssigkristallmedien jeweils eine oder mehrere Verbindungen von jeder dieser Formeln.

In der vorliegenden Anmeldung beschreibt der Ausdruck dielektrisch positiv Verbindungen oder Komponenten mit Δε > 3,0, dielektrisch neutral mit -1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε_{∥} - ε_{⊥}) definiert, während ε_{Drchschn.} (ε_{∥} + 2 ε_{⊥}) / 3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist. Die kapazitive Schwellenspannung (V₀), auch Freedericks-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε_{∥}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung (V₁₀), "Mittgrau-Spannung" (V₅₀) und Sättigungsspannung (V₉₀) wurden für 10 %, 50 % bzw. 90 % relativen Kontrast bestimmt.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD, ECB-AMD, VAN-AMD, IPS-AMD, FFS-AMD LCDs oder in Verbundsystemen, wie PDLC, NCAP, PN LCDs und speziell in ASM-PA LCDs.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₊₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-*E*-Alkenyl, jeweils mit n, m bzw. l C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 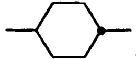 | **P** | 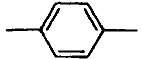 |
| **D** | 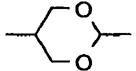 | **Dl** | 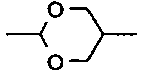 |
| **A** | 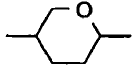 | **Al** | 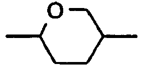 |
| **G** | 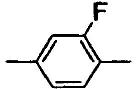 | **Gl** | 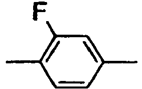 |
| **U** | 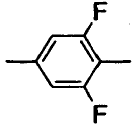 | **Ul** | 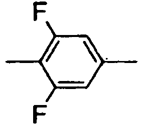 |
| **Y** | 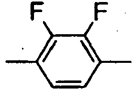 | | |
| **M** | 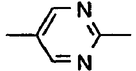 | **Ml** | 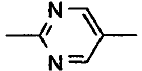 |
| **N** | 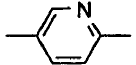 | **Nl** | 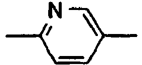 |
| **Np** | 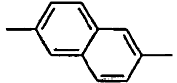 | **dH** | 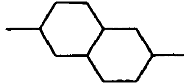 |
| **N3f** | 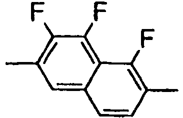 | **N3fl** | 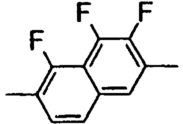 |
| **tH** | 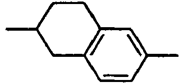 | **tHl** | 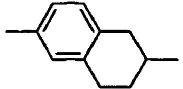 |
| **tH2f** | 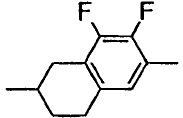 | **tH2fl** | 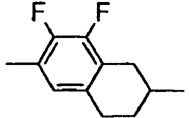 |
| **K** | 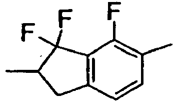 | **Kl** | 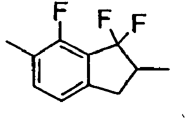 |
| **L** | 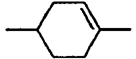 | **Ll** | 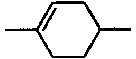 |
| **F** | 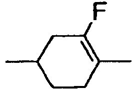 | **Fl** | 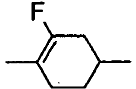 |

**Tabelle B: Verknüpfungsgruppen**

| | | | |
|---|---|---|---|
| **E** | -CH₂CH₂- | **Z** | -CO-O- |
| **V** | -CH=CH- | **Zl** | -O-CO- |
| **X** | -CF=CH- | **O** | -CH₂-O- |
| **Xl** | -CH=CF- | **Ol** | -O-CH₂- |
| **B** | -CF=CF- | **Q** | -CF₂-O- |
| **T** | -C≡=C | **Ql** | -O-CF₂- |
| **W** | -CF₂CF₂- | **T** | -C≡C- |

**Tabelle C: Endgruppen**

| **Linke Seite** | **Rechte Seite, Verwendung allein** | | |
|---|---|---|---|
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH-CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -_{C}nH₂ₙ-CH=CH-CₘH₂ₘ₊₁ |
| **-N-** | N=C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C=C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Verwendung zusammen miteinender und mit anderen** | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

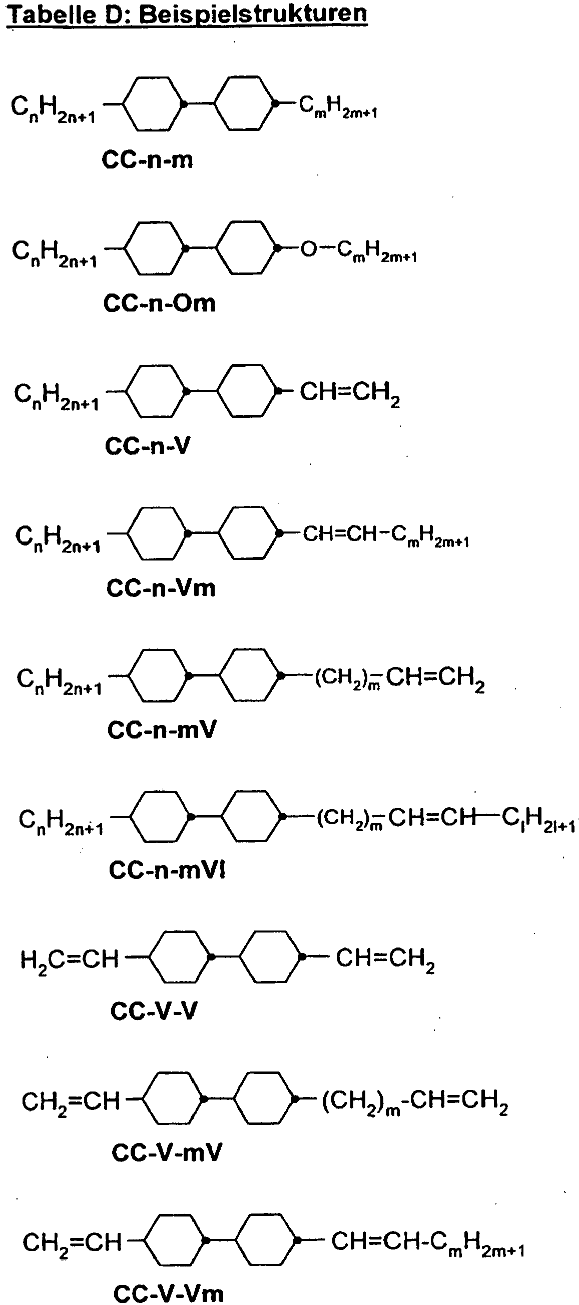

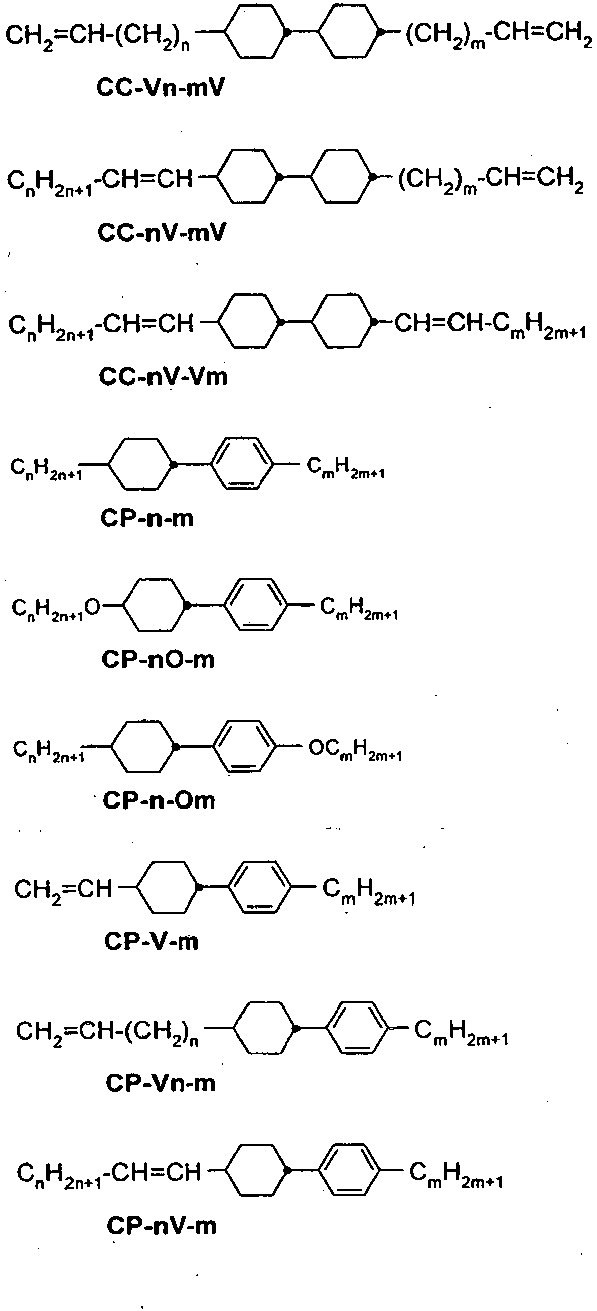

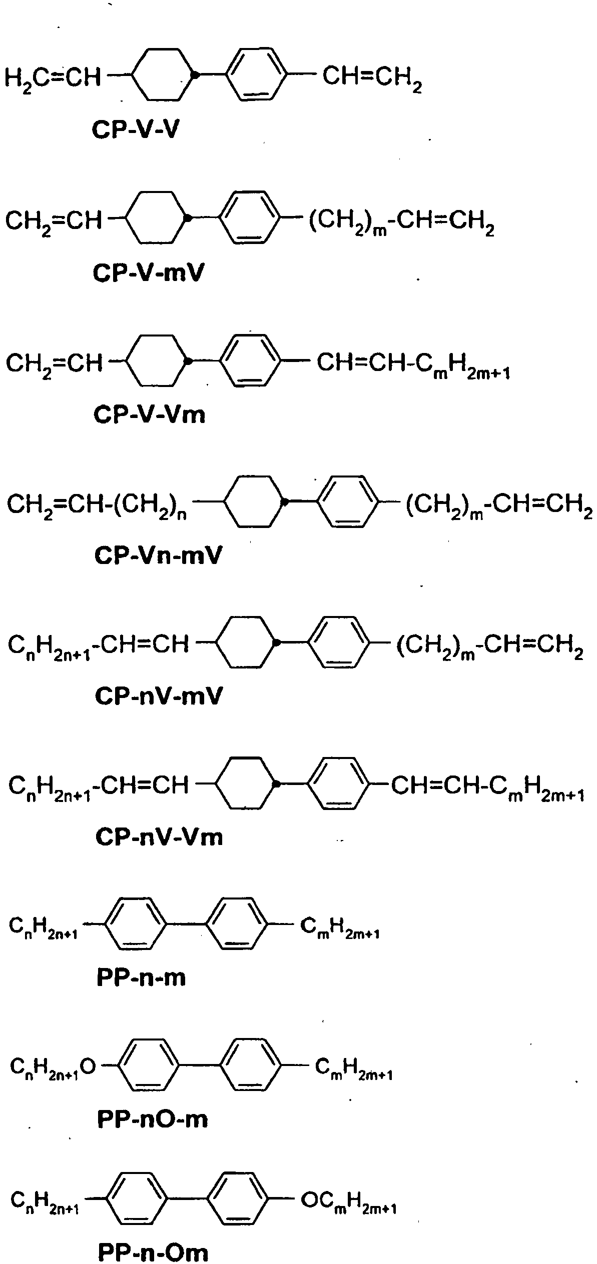

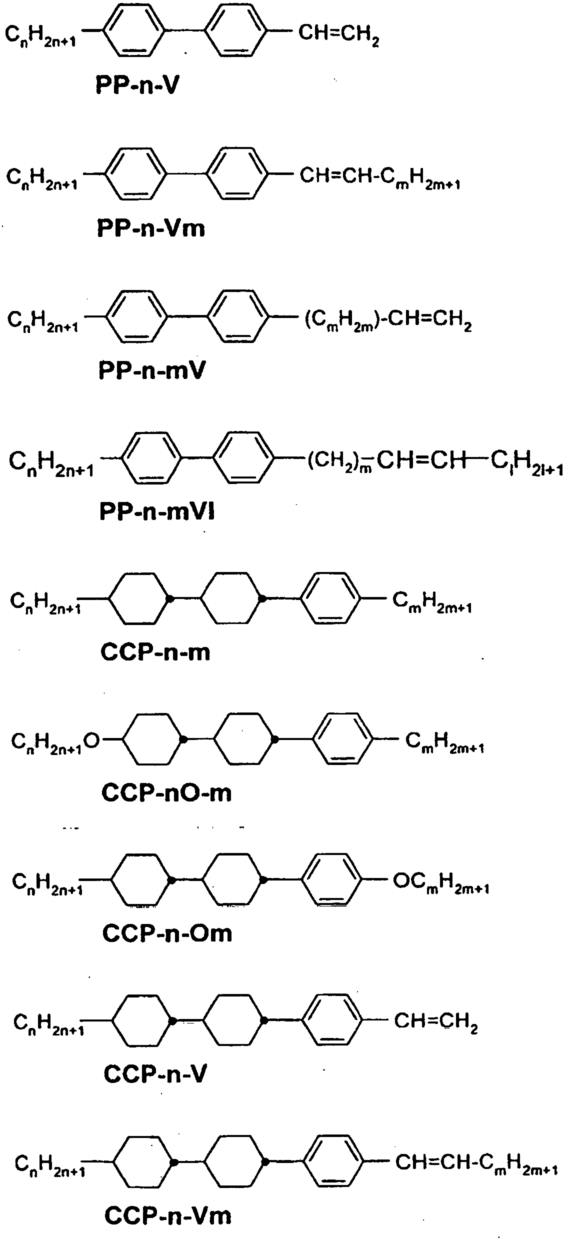

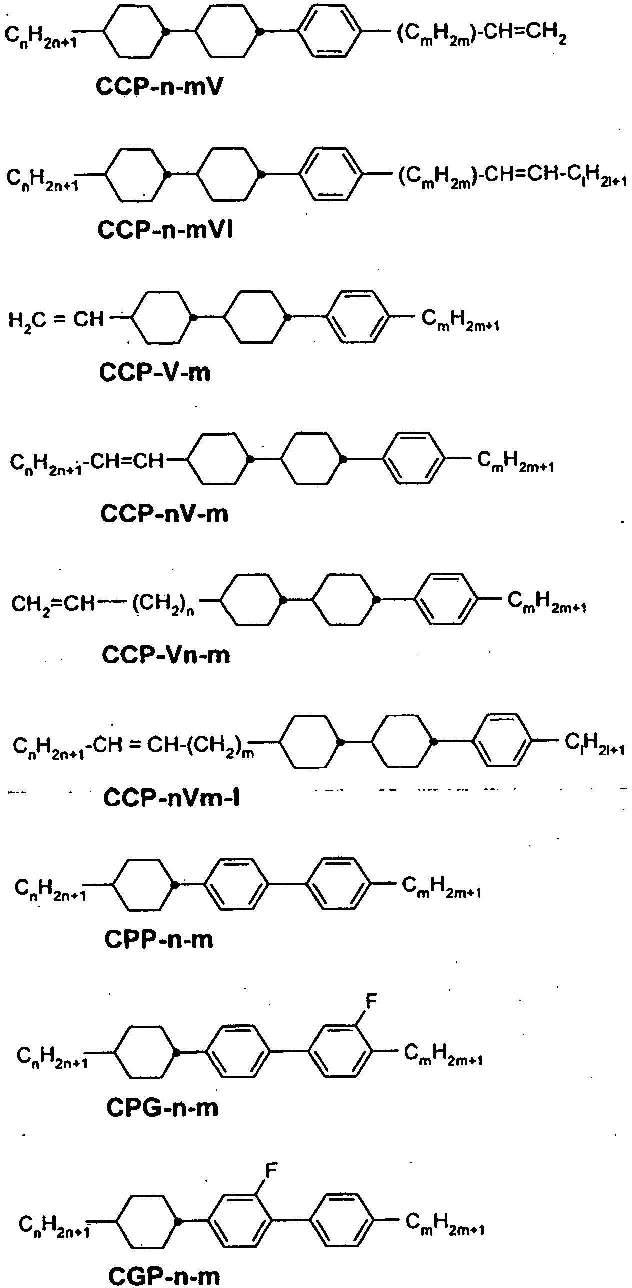

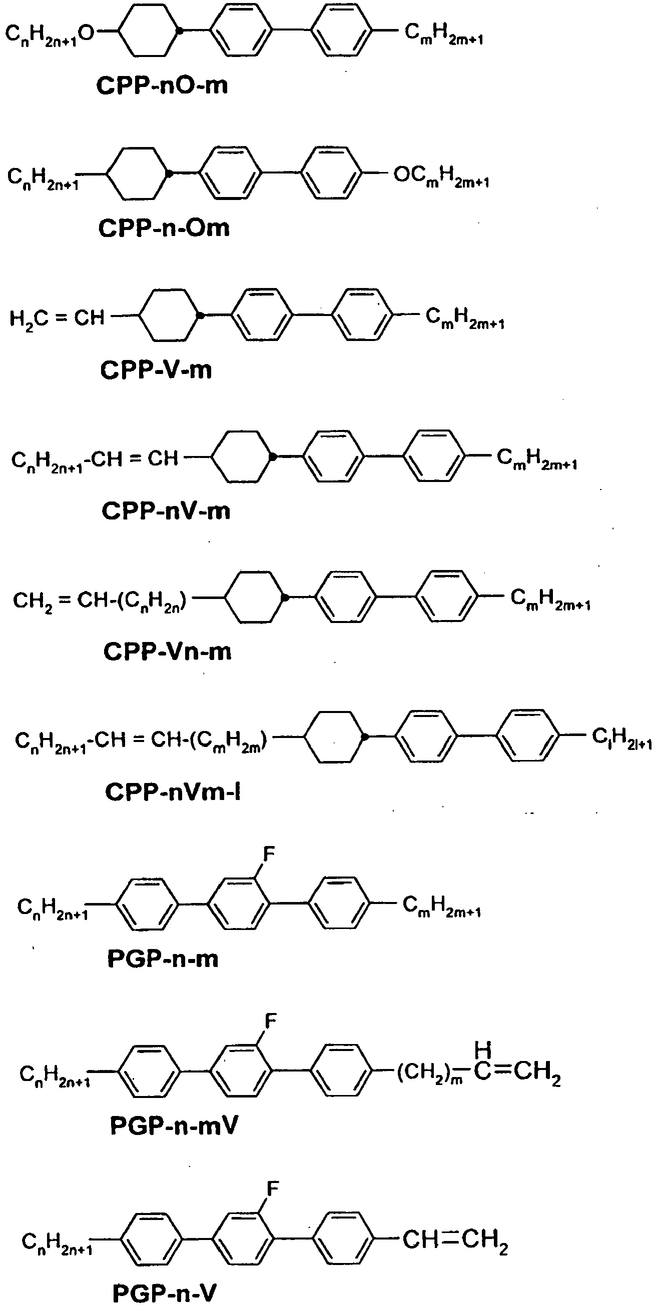

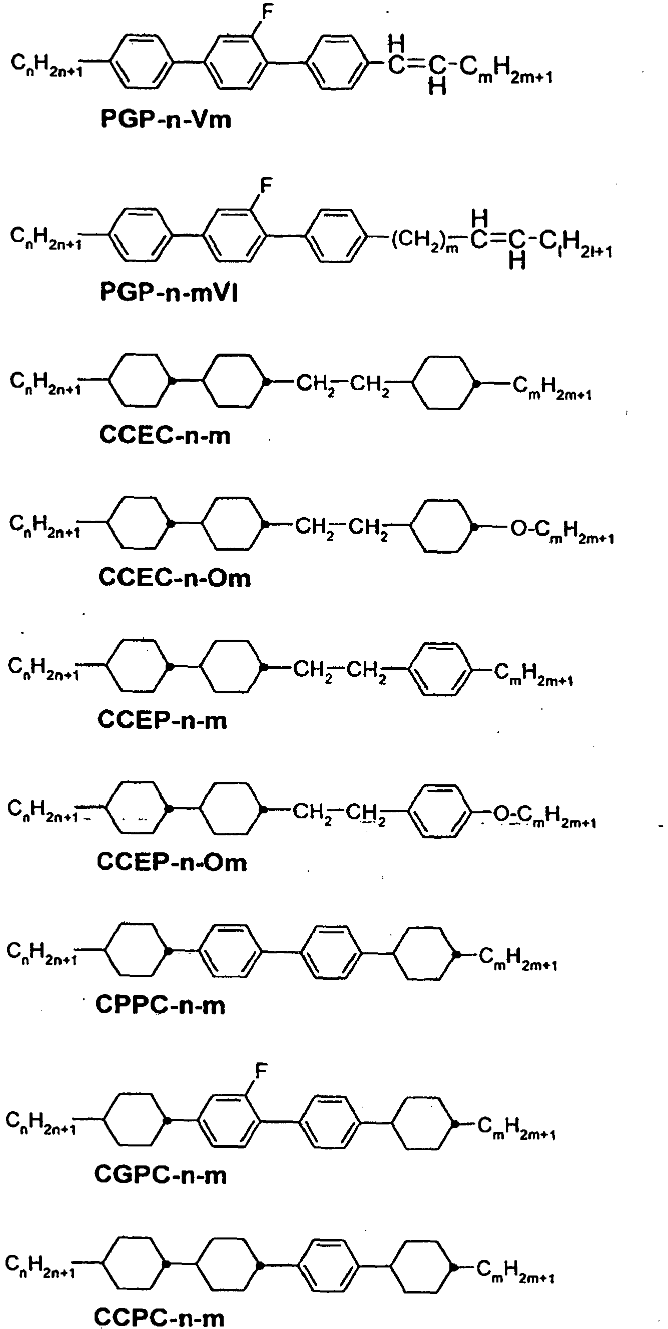

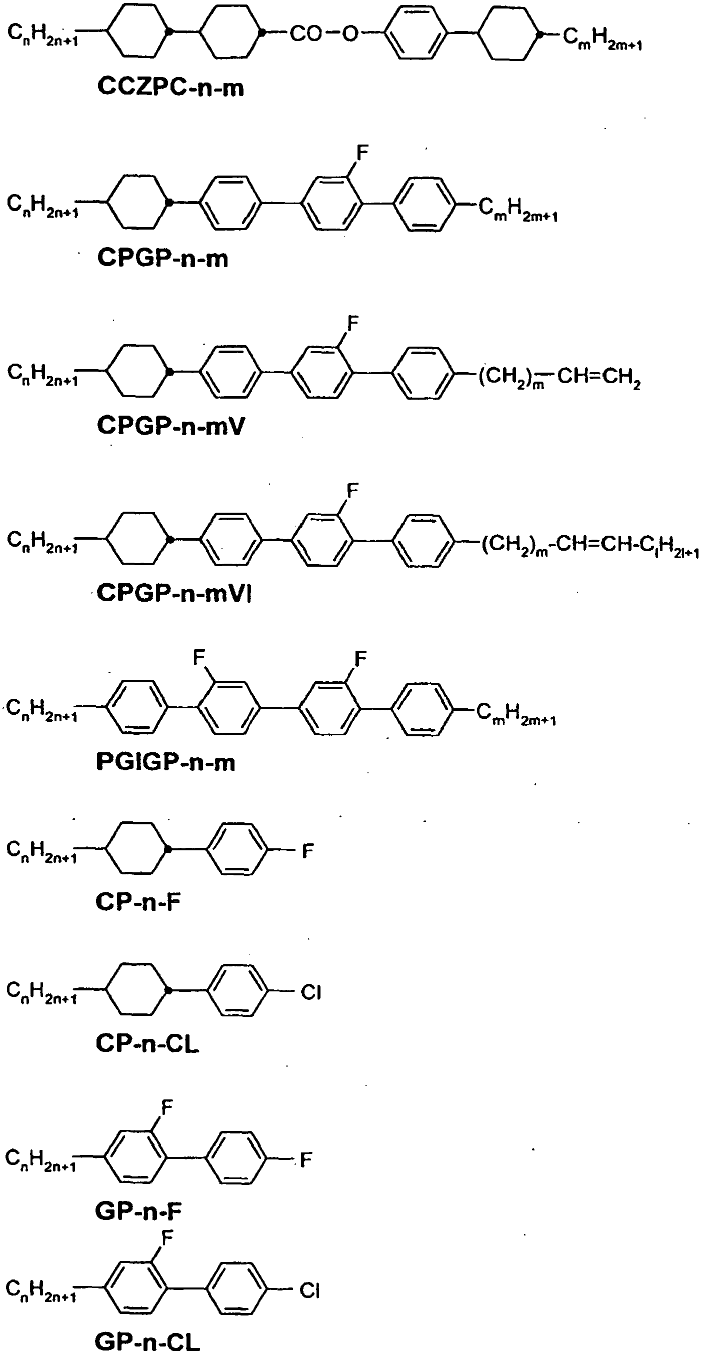

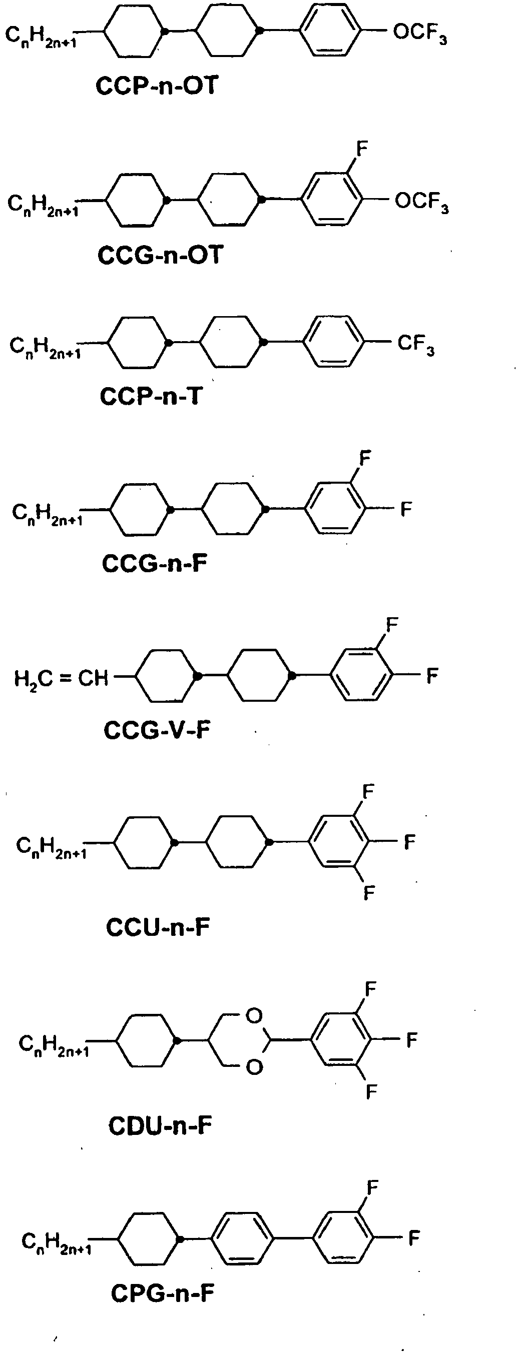

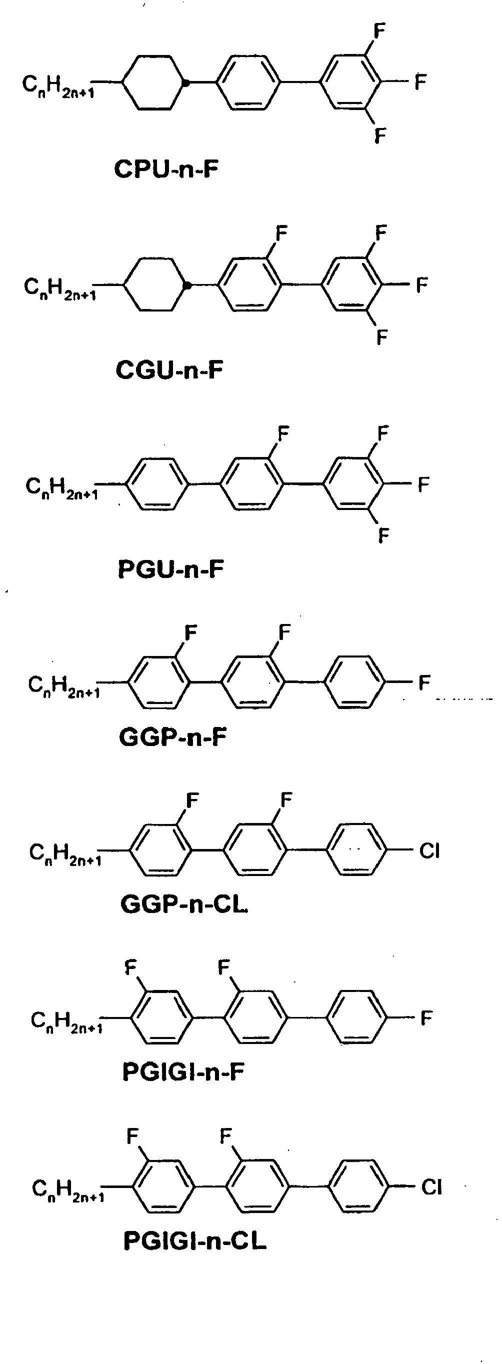

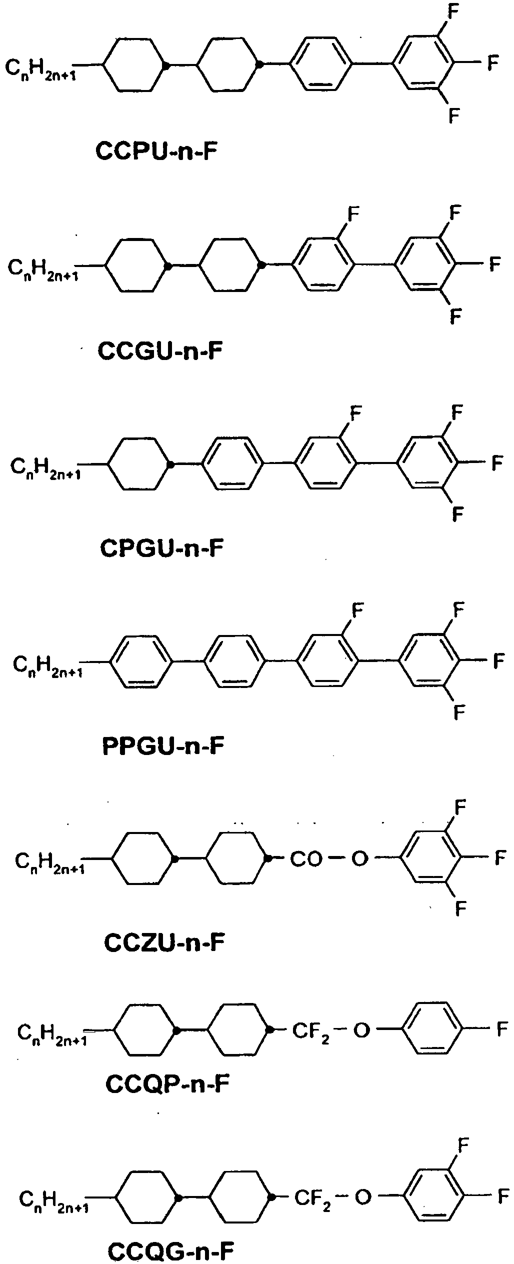

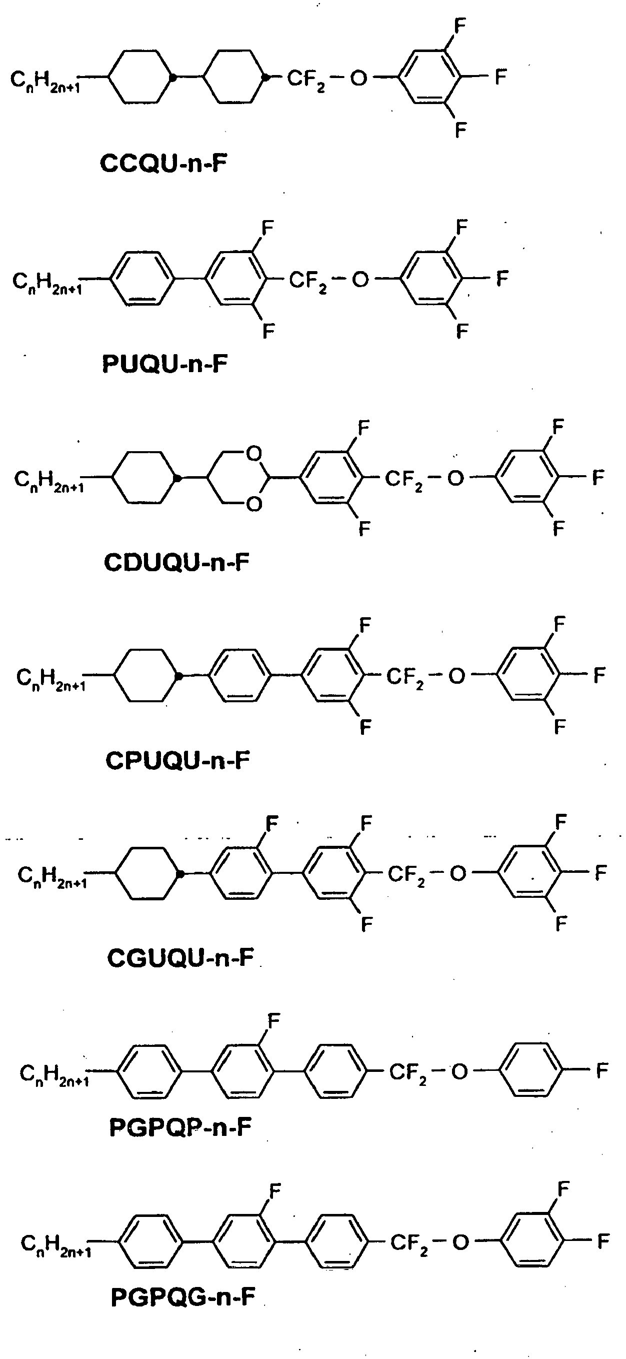

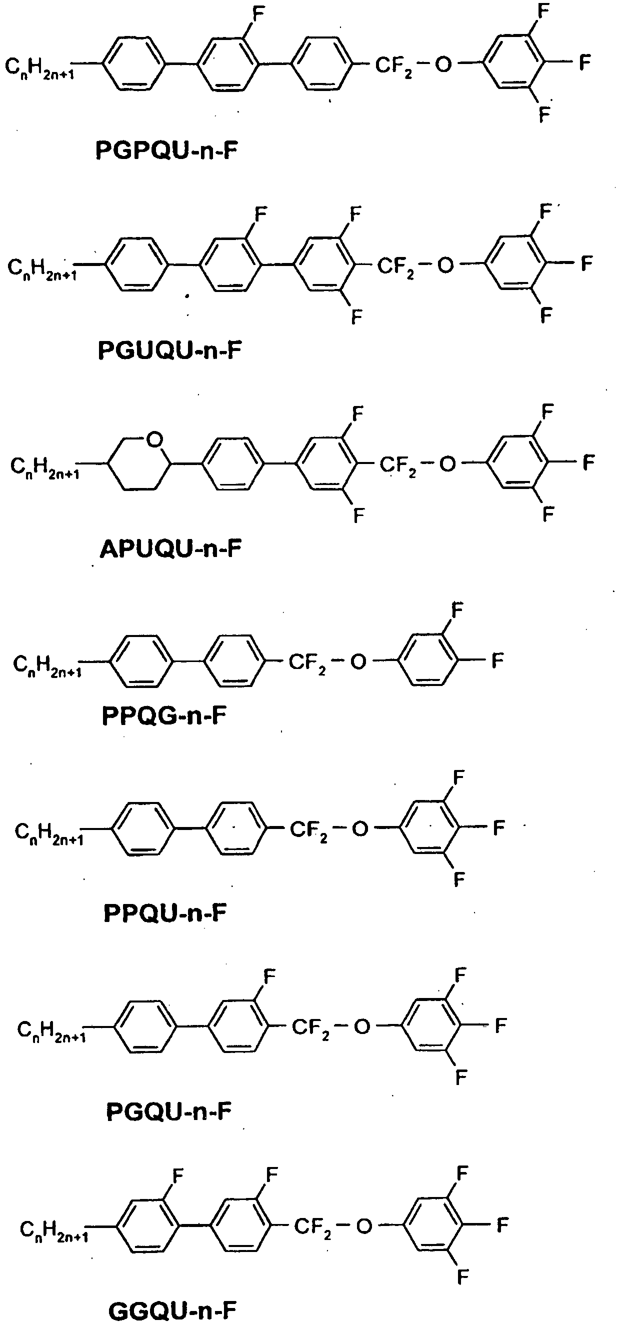

worin n, m und I bevorzugt unabhängig voneinander 1 bis 7 bedeuten.

In der folgenden Tabelle, Tabelle E, sind Beispielverbindungen zusammengestellt, die in den mesogenen Medien gemäß der vorliegenden Erfindung als Stabilisator verwendet werden können.

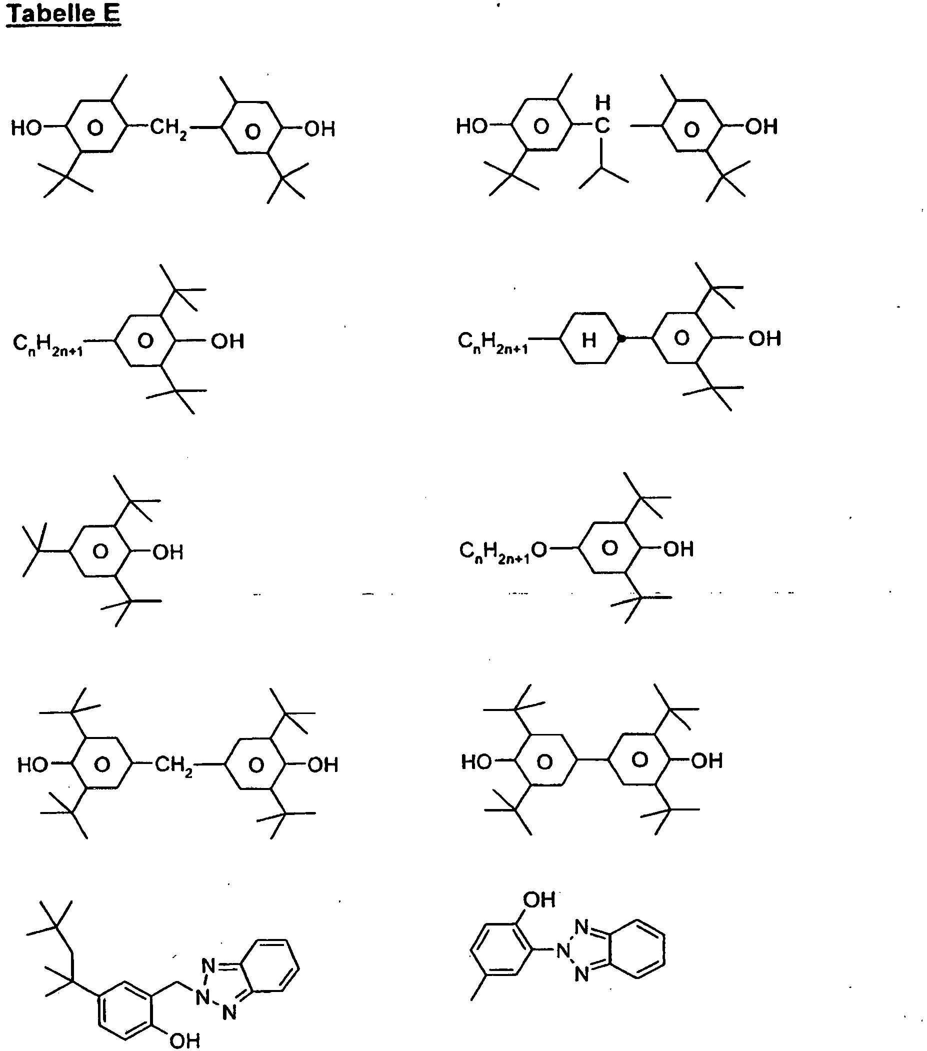

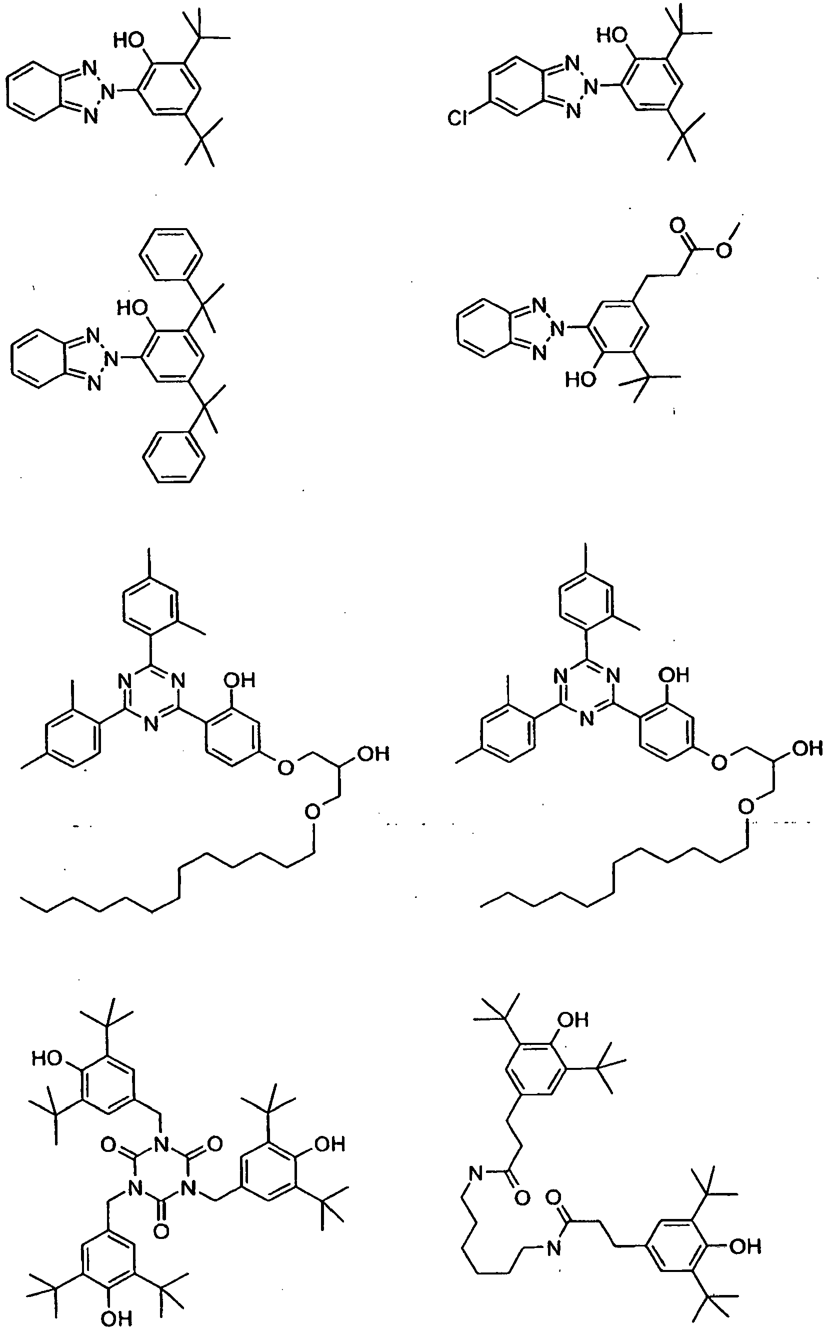

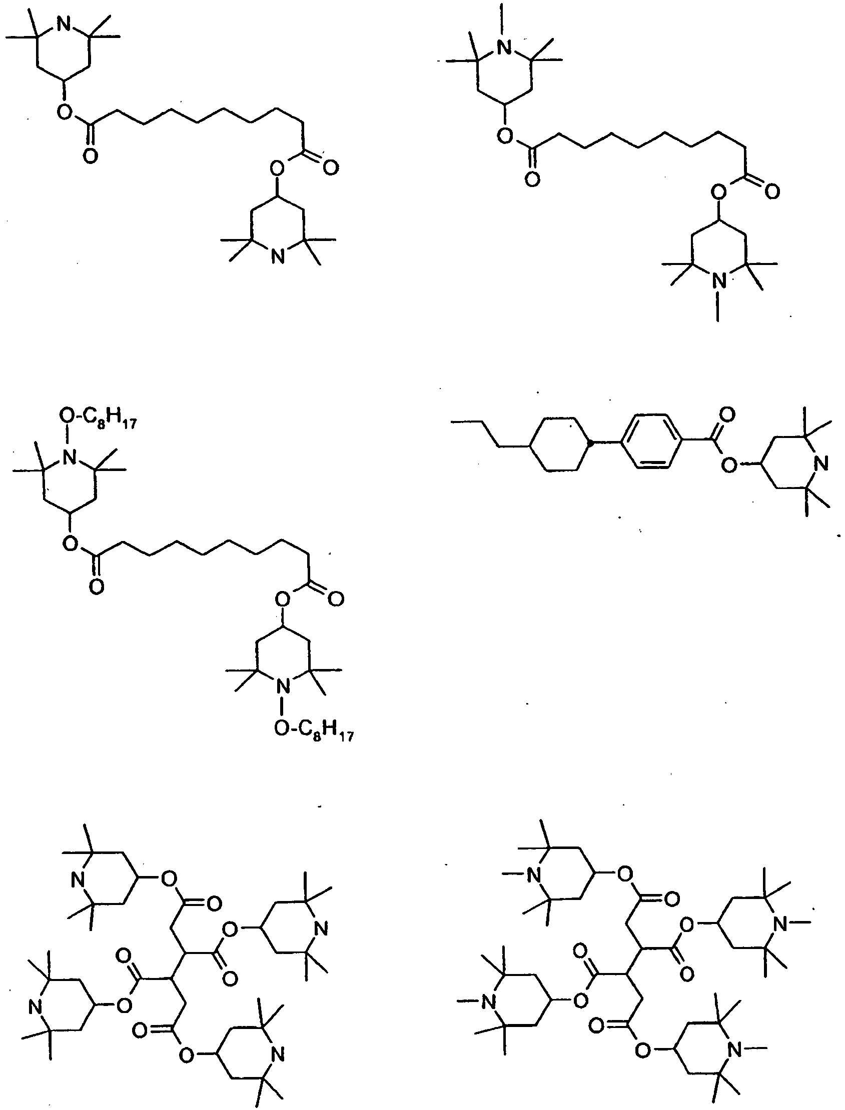

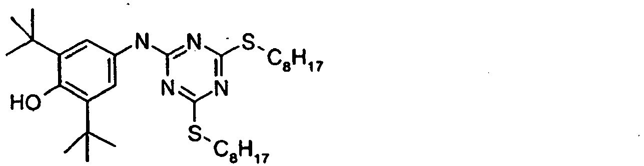

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

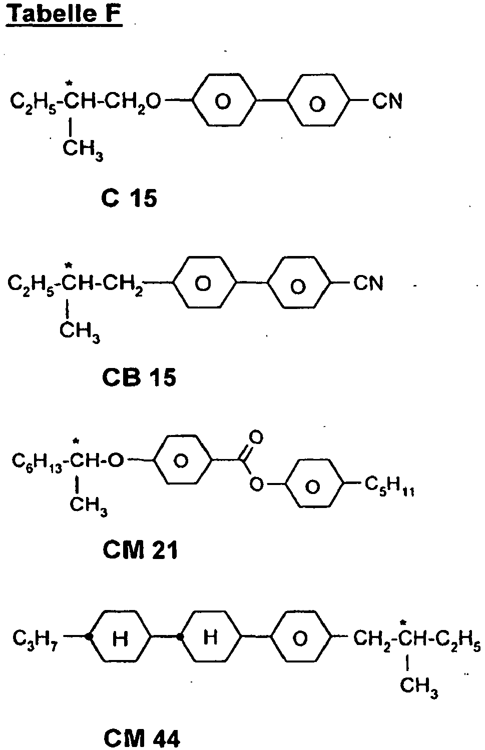

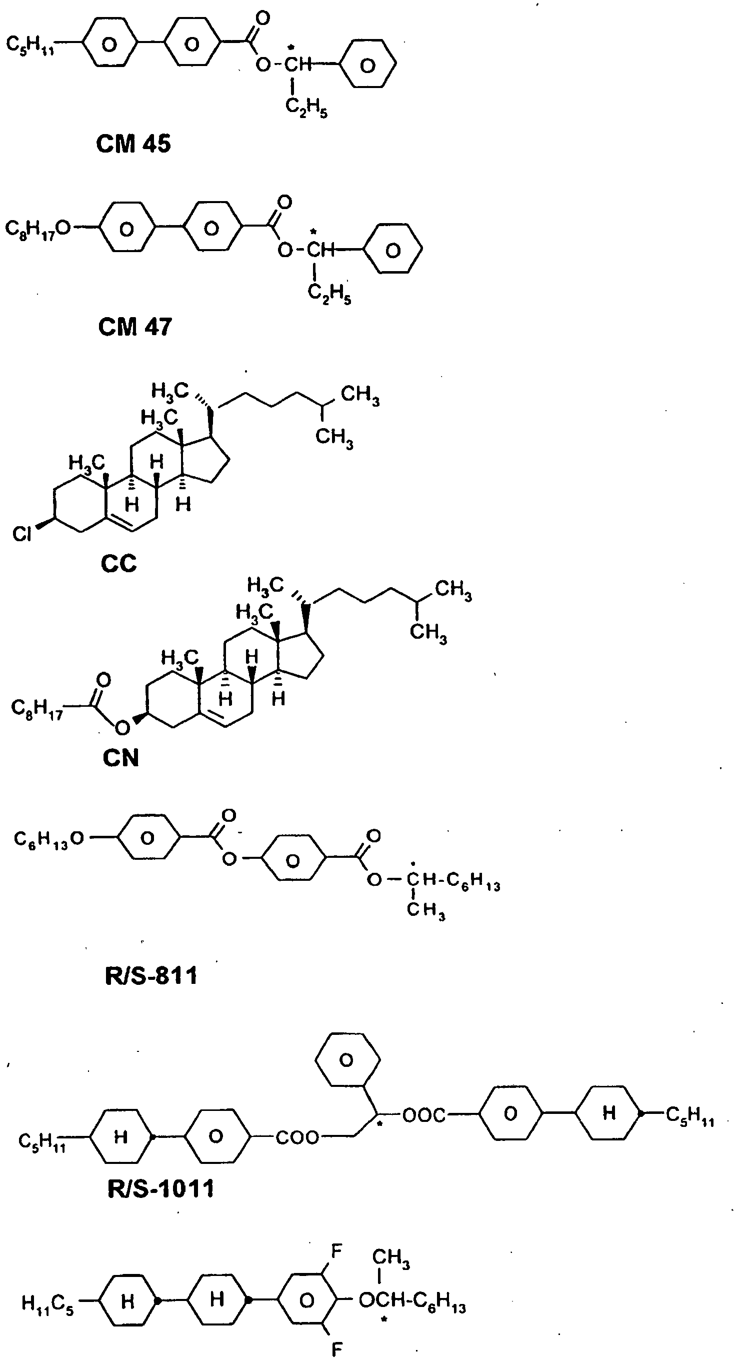

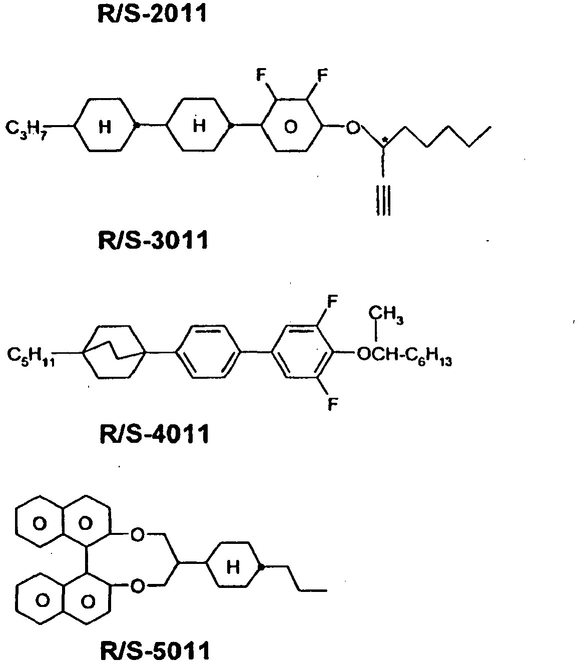

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Es werden Flüssigkristallmischungen mit der Zusammensetzung und den Eigenschaften wie in den folgenden Tabellen angegeben hergestellt.

### Beispiel 1.1

| Zusammensetzung | | | Physikalische Eigenschaften | |
|---|---|---|---|---|
| Verbindung | | | T (N,I) | = 71,5 °C |
| Nr. | Abkürzung | c/% | nₑ (20°C, 589,3 nm) | = 1,5872 |
| 1 | PPQG-3-F | 17,0 | Δn (20°C, 589,3 nm) | = 0,1016 |
| 2 | APUQU-2-F | 9,0 | ε_{\|\|} (20°C, 1 kHz) | = 12,5 |
| 3 | CDU-2-F | 9,0 | Δε (20°C, 1 kHz) | = 8,8 |
| 4 | CDU-3-F | 4,0 | k₁ (20°C) | = 12,3 pN |
| 5 | PGU-2-F | 8,0 | k₃ (20°C) | = 12,4 pN |
| 6 | CC-3-V | 27,0 | γ₁ (20°C) | = 60 mPa · s |
| 7 | CC-3-V1 | 12,0 | V₀ (20°C) | = 1,25 V |
| 8 | CCP-V-1 | 14,0 | | |
| Σ | | 100,0 | | |

Die Mischung des Beispiels 1.1, die eine Verbindung der Formel I-1 enthält, zeichnet sich unter anderem, insbesondere durch einen niedrige Schwelle und eine ganz besonders niedrige Rotationsviskosität aus.

### Beispiel 1.2

| Zusammensetzung | | | Physikalische Eigenschaften | |
|---|---|---|---|---|
| Verbindung | | | T(N,1) | = 72,0 °C |
| Nr. | Abkürzung | c/% | nₑ (20°C, 589,3 nm) | = 1,5851 |
| 1 | PPQU-3-F | 18,0 | Δn (20°C, 589,3 nm) | = 0,0996 |
| 2 | APUQU-2-F | 8,0 | ε_{\|\|} (20°C, 1 kHz) | = 12,3 |
| 3 | CDU-2-F | 9,0 | Δε (20°C, 1 kHz) | = 8,8 |
| 4 | PGU-2-F | 7,0 | γ₁ (20°C) | = 58 mPa · s |
| 5 | CC-3-V | 28,0 | k₁(20°C) | = 12,6 pN |
| 6 | CC-3-V1 | 12,0 | k₃(20°C) | = 12,6 pN |
| 7 | CCP-V-1 | 10,0 | V₀ (20°C) | = 1,26 V |
| 8 | CCP-V2-1 | 8.0 | | |
| Σ | | 100,0 | | |

Die Mischung des Beispiels 1.2, die eine Verbindung der Formel I-2 enthält, zeichnet sich unter anderem, insbesondere durch eine niedrige Schwelle und eine ganz besonders niedrige Rotationsviskosität aus.

### Beispiel 1.3

| Zusammensetzung | | | Physikalische Eigenschaften | |
|---|---|---|---|---|
| Verbindung | | | T (N,I) | = 74,5 °C |
| Nr. | Abkürzung | c/% | nₑ (20°C, 589,3 nm) | = 1,5871 |
| 1 | PPQU-3-F | 18,0 | Δn (20°C, 589,3 nm) | = 0,1007 |
| 2 | APUQU-2-F | 8,0 | ε_{\|\|} (20°C, 1 kHz) | = 12,1 |
| 3 | CDU-2-F | 8,0 | Δε (20°C, 1 kHz) | = 8,7 |
| 4 | PGU-2-F | 7,0 | γ₁ (20°C) | = 60 rnPa · s |
| 5 | CC-3-V | 27,0 | k₁ (20°C) | = 12,8 pN |
| 6 | CC-3-V1 | 12,0 | k₃ (20°C) | = 13,1 pN |
| 7 | CCP-V-1 | 14,0 | V₀ (20°C) | = 1,28 V |
| 8 | CCP-V2-1 | 8,0 | | |
| Σ | | 100,0 | | |

Die Mischung des Beispiels 1.3, die eine Verbindung der Formel I-2 enthält, zeichnet sich unter anderem, insbesondere durch eine niedrige Schwelle und eine ganz besonders niedrige Rotationsviskosität aus.

### Vergleichsbeispiel 1.1

| Zusammensetzung | | | Physikalische Eigenschaften | |
|---|---|---|---|---|
| Verbindung | | | T(N,I) | = 88,0 °C |
| Nr. | Abkürzung | c/% | nₑ (20°C, 589,3 nm) | = 1,6096 |
| 1 | PPQU-3-F | 15,0 | Δn (20°C, 589,3 nm) | = 0,1206 |
| 2 | APUQU-2-F | 3,0 | ε_{\|\|} (20°C, 1 kHz) | = 14,0 |
| 3 | APUQU-3-F | 11,0 | Δε (20°C, 1 kHz) | = 10,7 |
| 4 | PGUQU-3-F | 3,0 | γ₁ (20°C) | = 82 mPa · s |
| 5 | PGUQU-4-F | 7,0 | k₁(20°C) | = 14,8 pN |
| 6 | CC-3-V | 34,0 | k₃(20°C) | = 14,9 pN |
| 7 | CCP-V-1 | 11,0 | V₀ (20°C) | = 1,24 V |
| 8 | CCP-V2-1 | 10,0 | | |
| 9 | PGP-2-3 | 3,0 | | |
| 10 | PGP-2-4 | 3.0 | | |
| Σ | | 100,0 | | |

Die Mischung des Vergleichsbeispiels 1.1, die eine Verbindung der Formel I-2 enthält, zeichnet sich unter anderem, insbesondere durch eine niedrige Schwelle und eine besonders niedrige Rotationsviskosität aus.

### Vergleichsbeispiel 1.2

| Zusammensetzung | | | Physikalische Eigenschaften | | | |
|---|---|---|---|---|---|---|
| Verbindung | | | T(N,I) | = | 88,0 | °C |
| Nr. | Abkürzung | c/% | nₑ (20°C, 589,3 nm) | = | 1,6129 | |
| 1 | PPQU-3-F | 15,0 | Δn (20°C, 589,3 nm) | = | 0,1225 | |
| 2 | APUQU-2-F | 3,0 | ε_{\|\|} (20°C, 1 kHz) | = | 13,7 | |
| 3 | APUQU-3-F | 9,0 | Δε (20°C, 1 kHz) | = | 10,5 | |
| 4 | PGUQU-3-F | 3,0 | γ₁ (20°C) | = | 82 | mPa · s |
| 5 | PGUQU-4-F | 7,0 | k₁(20°C) | = | 15,0 | pN |
| 6 | PGU-3-F | 2,0 | k₃(20°C) | = | 14,9 | pN |
| 7 | CC-3-V | 33,0 | V₀ (20°C) | = | 1,25 | V |
| 8 | CCP-V-1 | 11,0 | | | | |
| 9 | CCP-V2-1 | 11,0 | | | | |
| 10 | PGP-2-3 | 3,0 | | | | |
| 11 | PGP-2-4 | 3,0 | | | | |
| Σ | | 100,0 | | | | |

Die Mischung des Vergleichsbeispiels 1.2, die eine Verbindung der Formel I-2 enthält, zeichnet sich unter anderem, insbesondere durch eine niedrige Schwelle und eine besonders niedrige Rotationsviskosität aus.

### Vergleichsbeispiel 1.3

| Zusammensetzung | | | Physikalische Eigenschaften | | | |
|---|---|---|---|---|---|---|
| Verbindung | | | T(N,I) | = | 89,5 | °C |
| Nr. | Abkürzung | c/% | nₑ (20°C, 589,3 nm) | = | 1,6127 | |
| 1 | PGQU-3-F | 14,0 | Δn (20°C, 589,3 nm) | = | 0,1232 | |
| 2 | APUQU-2-F | 3,0 | ε_{\|\|} (20°C, 1 kHz) | = | 14,4 | |
| 3 | APUQU-3-F | 11,0 | Δε (20°C, 1 kHz) | = | 10,9 | |
| 4 | PGUQU-3-F | 3,0 | γ₁ (20°C) | = | 90 | mPa · s |
| 5 | PGUQU-4-F | 7,0 | k₁(20°C) | = | 14,4 | pN |
| 6 | CC-3-V | 32,0 | k₃(20°C) | = | 15,1 | pN |
| 7 | CCP-V-1 | 11,0 | V₀ (20°C) | = | 1,20 | V |
| 8 | CCP-V2-1 | 11,0 | | | | |
| 9 | PGP-2-3 | 4,0 | | | | |
| 10 | PGP-2-4 | 4.0 | | | | |
| Σ | | 100,0 | | | | |

Die Mischung des Vergleichsbeispiels 1.3 , die eine Verbindung der Formel 1-3 enthält, zeichnet sich unter anderem, insbesondere durch eine niedrige Rotationsviskosität und eine besonders niedrige Schwelle aus.

### Vergleichsbeispiel 1.4

| Zusammensetzung | | | Physikalische Eigenschaften | | | |
|---|---|---|---|---|---|---|
| Verbindung | | | T(N,I) | = | 88,5 | °C |
| Nr. | Abkürzung | c/% | nₑ (20°C, 589,3 nm) | = | 1,6111 | |
| 1 | PGQU-3-F | 13,5 | Δn (20°C, 589,3 nm) | = | 0,1214 | |
| 2 | APUQU-2-F | 3,0 | ε_{\|\|} (20°C, 1 kHz) | = | 13,7 | |
| 3 | APUQU-3-F | 10,0 | Δε (20°C, 1 kHz) | = | 10,3 | |
| 4 | PGUQU-3-F | 2,0 | γ₁ (20°C) | = | 82 | mPa · s |
| 5 | PGUQU-4-F | 8,0 | k₁(20°C) | = | 14,2 | pN |
| 6 | CC-3-V | 33,5 | k₃(20° C) | = | 14,8 | pN |
| 7 | CCP-V-1 | 11,0 | V₀ (20°C) | = | 1,24 | V |
| 8 | CCP-V2-1 | 11,0 | | | | |
| 9 | PGP-2-3 | 4,0 | | | | |
| 10 | PGP-2-4 | 4.0 | | | | |
| Σ | | 100,0 | | | | |

Die Mischung des Vergleichsbeispiels 1.4, die eine Verbindung der Formel I-3 enthält, zeichnet sich unter anderem, insbesondere durch eine niedrige Schwelle und eine besonders niedrige Rotationsviskosität aus.

### Vergleichsbelspiel 1.5

| Zusammensetzung | | | Physikalische Eigenschaften | | | |
|---|---|---|---|---|---|---|
| Verbindung | | | T(N,I) | = | 90,5 | °C |
| Nr. | Abkürzung | c/% | nₑ (20°C, 589,3 nm) | = | 1,6104 | |
| 1 | GGQU-3-F | 11,0 | Δn (20°C, 589,3 nm) | = | 0,1207 | |
| 2 | APUQU-2-F | 3,0 | ε_{\|\|} (20°C, 1 kHz) | = | 14,2 | |
| 3 | APUQU-3-F | 9,0 | Δε (20°C, 1 kHz) | = | 10,6 | |
| 4 | PGUQU-3-F | 3,0 | γ₁ (20°C) | = | 91 | mPa · s |
| 5 | PGUQU-4-F | 7,0 | k₁(20°C) | = | 13,9 | pN |
| 6 | DPGU-4-F | 3,0 | k₃(20°C) | = | 14,9 | pN |
| 7 | CC-3-V | 34,0 | V₀ (20°C) | = | 1,20 | V |
| 8 | CCP-V-1 | 11,0 | | | | |
| 9 | CCP-V2-1 | 11,0 | | | | |
| 10 | PGP-2-3 | 4,0 | | | | |
| 11 | PGP-2-4 | 4,0 | | | | |
| Σ | | 100.0 | | | | |

Die Mischung des Vergleichsbeispiels 1.5, die eine Verbindung der Formel I-4 enthält, zeichnet sich unter anderem, insbesondere durch einen niedrige Rotationsviskosität und eine besonders niedrige Schwelle aus.

### Vergleichsbeispiel 1.6

| Zusammensetzung | | | Physikalische Eigenschaften | | | |
|---|---|---|---|---|---|---|
| Verbindung | | | T(N,I) | = | 87,5 | °C |
| Nr. | Abkürzung | c/% | nₑ (20°C, 589,3 nm) | = | 1,6137 | |
| 1 | GGQU-3-F | 10,0 | Δn (20°C, 589,3 nm) | = | 0,1229 | |
| 2 | APUQU-2-F | 3,0 | ε_{\|\|} (20°C, 1 kHz) | = | 14,2 | |
| 3 | APUQU-3-F | 9,0 | Δε (20°C, 1 kHz) | = | 10,6 | |
| 4 | PGUQU-3-F | 3,0 | γ₁ (20°C) | = | 90 | mPa · s |
| 5 | PGUQU-4-F | 8,0 | k₁(20°C) | = | 13,5 | pN |
| 6 | PGU-3-F | 4,0 | k₃(20°C) | = | 14,3 | pN |
| 7 | CC-3-V | 33,0 | V₀ (20°C) | = | 1,19 | V |
| 8 | CCP-V-1 | 11,0 | | | | |
| 9 | CCP-V2-1 | 11,0 | | | | |
| 10 | PGP-2-3 | 4,0 | | | | |
| 11 | PGP-2-4 | 4,0 | | | | |
| Σ | | 100,0 | | | | |

Die Mischung des Vergleichsbeispiels 1,6, die eine Verbindung der Formel I-4 enthält, zeichnet sich unter anderem, insbesondere durch eine niedrige Rotationsviskosität und eine besonders niedrige Schwelle aus.

### Vergleichsbeispiel 1.7

| Zusammensetzung | | | Physikalische Eigenschaften | | | |
|---|---|---|---|---|---|---|
| Verbindung | | | T(N,I) | = | n.z.b. | °C |
| Nr. | Abkürzung | c/% | nₑ (20°C, 589,3 nm) | = | n.z.b. | |
| 1 | PPQG-3-F | 11,0 | Δn (20°C, 589,3 nm) | = | n.z.b. | |
| 2 | APUQU-2-F | 3,0 | ε_{\|\|} (20°C, 1 kHz) | = | n.z.b. | |
| 3 | APUQU-3-F | 11,0 | Δε (20°C, 1 kHz) | = | n.z.b. | |
| 4 | PGUQU-3-F | 2,0 | γ₁ (20°C) | = | n.z.b. | mPa · s |
| 5 | PGUQU-4-F | 5,0 | k₁(20°C) | = | n.z.b. | pN |
| 6 | PGUQU-5-F | 6,0 | k₃(20°C) | = | n.z.b. | pN |
| 7 | PGU-3-F | 4,0 | V₀ (20°C) | = | n.z.b. | V |
| 8 | CC-3-V | 36,0 | | | | |
| 9 | CCP-V-1 | 10,0 | | | | |
| 10 | CCP-V2-1 | 8,0 | | | | |
| 11 | PGP-2-3 | 2,0 | | | | |
| 12 | PGP-2-4 | 2,0 | | | | |
| Σ | | 100,0 | | | | |

| | | | | | | |
|---|---|---|---|---|---|---|
| Bemerkung: n.z.b.: noch zu bestimmen. | | | | | | |

Die Mischung des Vergleichsbeispiels 1.7, die eine Verbindung der Formel I-1 enthält, zeichnet sich durch günstige anwendungstechnische Eigenschaften aus.

Die Mischungen der Beispiele 1.1 bis 1.3 eignen sich sehr gut für Auch die Mischungen der Vergleichsbeispiele 1.1 bis 1.7 können in Anzeigen im IPS-Modus verwendet werden.

## Patentansprüche

1. Flüssigkristallmedium, **dadurch gekennzeichnet, dass** es
- eine oder mehrere Verbindungen der Formeln I 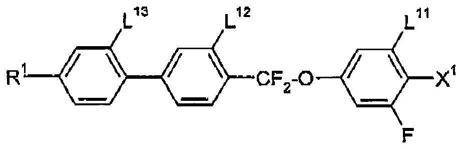 worin
R¹ Alkyl, Alkoxy, fluoriertes Alkyl oder fluoriertes Alkoxy mit 1 bis 7 C-Atomen. Alkenyl, Alkenyloxy, Alkoxyalkyl oder fluoriertes Alkenyl mit 2 bis 7 C-Atomen bedeutet,
L¹¹ H und L¹² und L¹³ unabhängig voneinander H oder F oder
L¹¹ F, L¹² F und L¹³ H oder F und
X¹ F, Cl, -CFH₂, -CF₂H, -CF₃, -OCF₂H oder -OCF₃, bedeutet,
- eine oder mehrere Verbindungen der Formel II und
- eine oder mehrere Verbindungen der Formel III 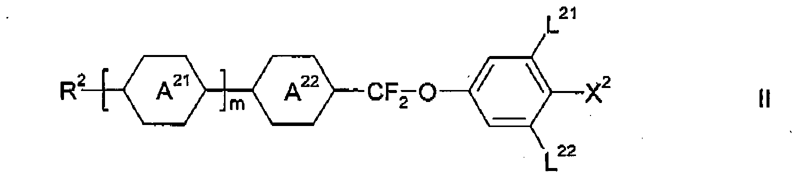 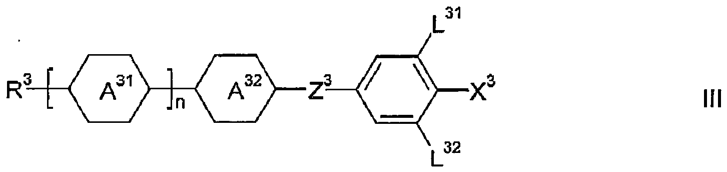 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen, 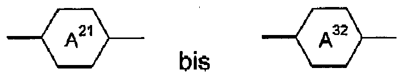 bei jedem Erscheinen unabhängig voneinander 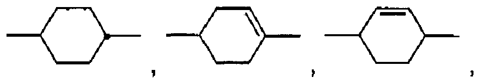 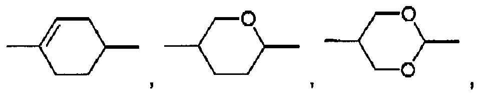 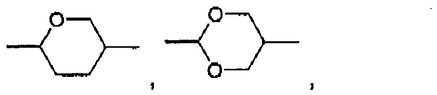 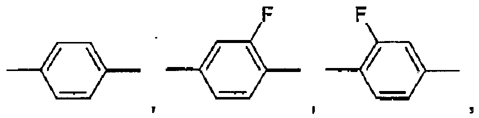 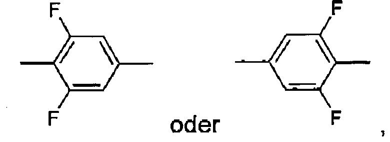
L²¹, L²², L³¹ und L³² unabhängig voneinander H oder F,
X² und X³ unabhängig voneinander Halogen, halogeniertes Alkyl oder Alkoxy mit 1 bis 3 C-Atomen oder halogeniertes Alkenyl oder Alkenyloxy mit 2 oder 3 C-Atomen,
Z³ -CH₂CH₂-, -CF₂CF₂-, -COO-, *trans-* -CH=CH-, *trans-* -CF=CF-, -CH₃O- oder eine Einfachbindung und
m und n unabhängig voneinander 0, 1, 2 oder 3,
bedeuten,
- und, dass die eine oder mehrere Verbindungen der Formel III eine oder mehrere der Verbindungen ausgewählt aus der Gruppe der Verbindungen der Formel III-2d-1 und III-2e-1 sind oder enthalten 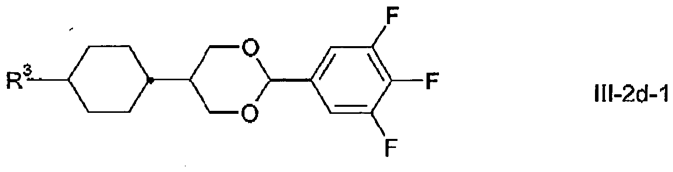 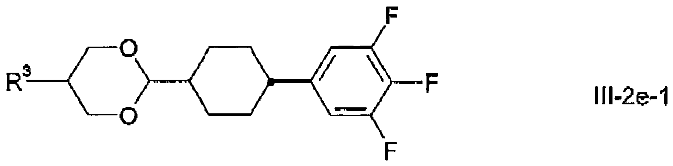 worin die Parameter die oben angegebenen Bedeutungen haben und
wobei die Verbindungen der Formel I nach Anspruch 1 von den Verbindungen der Formel II ausgeschlossen sind,
enthält.

2. Medium nach Anspruch 1, **dadurch gekennzeichnet, dass** es
- eine oder mehrere Verbindungen ausgewählt aus der Gruppe der Verbindungen der der Formeln I-1 bis I-4 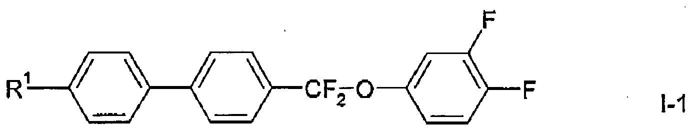 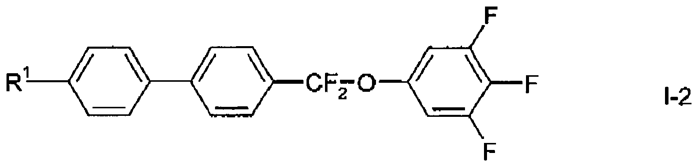 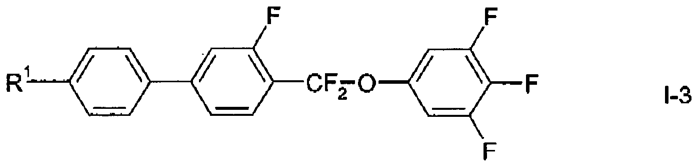 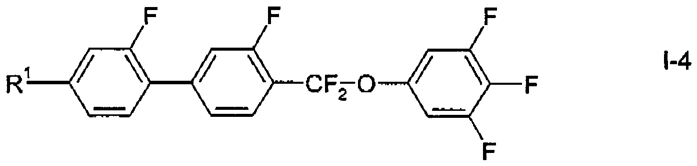 worin R¹ die in Anspruch 1 unter Formel I angegebene Bedeutung besitzt,
enthält.

3. Medium nach einem der Ansprüche 1 oder 2, **dadurch gekennzeichnet, dass** es
- eine oder mehrere Verbindungen der Formel IV 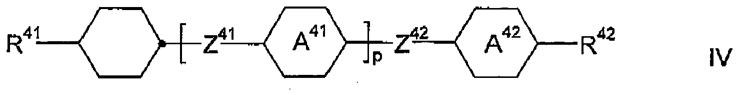 worin
R⁴¹ und R⁴² unabhängig voneinander die in Anspruch 2 oben unter Formel II für R² angegebene Bedeutung besitzen, 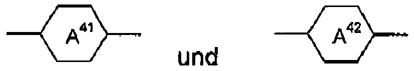 unabhängig voneinander und bei zweifachem Auftreten von 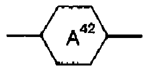 auch diese unabhängig voneinander 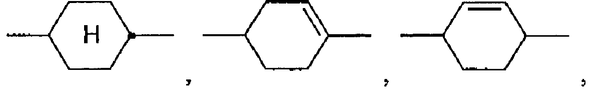 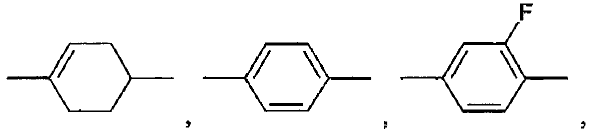 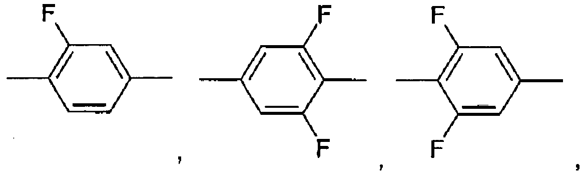 oder 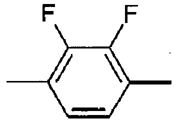 bedeuten,
Z⁴¹ und Z⁴² unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O- -CF₂O- -C≡C- oder eine Einfachbindung und
p 0, 1 oder 2 bedeutet,
enthält.

4. Medium nach einem oder mehreren der Ansprüche 1 bis 3, **dadurch gekennzeichnet, dass** die Gesamtkonzentration der Verbindungen der Formel I im Medium im Bereich von 1 % bis 50 % liegt.

5. Medium nach einem oder mehreren der Ansprüche 1 bis 4, **dadurch gekennzeichnet, dass** es eine oder mehrere Verbindungen der Formel II-2j-1 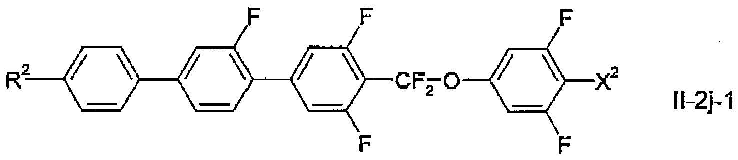 worin R² und X² die in Anspruch 2 unter Formel II angegebenen Bedeutungen besitzen,
enthält.

6. Medium nach einem oder mehreren der Ansprüche 1 bis 5, **dadurch gekennzeichnet, dass** es eine oder mehrere Verbindungen der Formel III-2d-1, wie in Anspruch 1 angegeben, enthält.

7. Medium nach einem oder mehreren der Ansprüche 1 bis 6, **dadurch gekennzeichnet, dass** es eine oder mehrere dielektrisch neutrale Verbindungen der Formel V 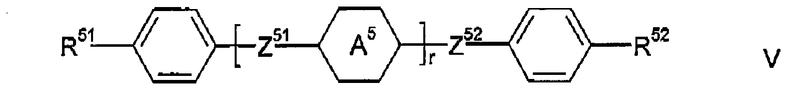 worin
R⁵¹ und R⁵² unabhängig voneinander die für R² unter Formel II in Anspruch 2 angegebene Bedeutung besitzen, 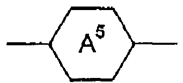 bei jedem Auftreten unabhängig voneinander 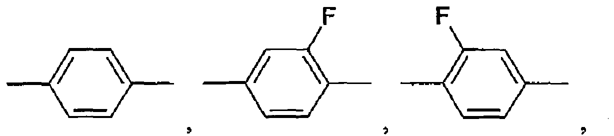 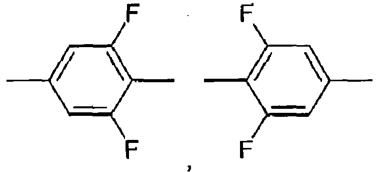 oder 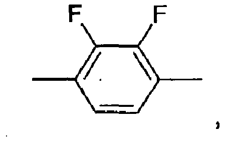
Z⁵¹ und Z⁵² unabhängig voneinander und bei zweifachem Auftreten von Z⁶¹ auch diese unabhängig voneinander-CH₂CH₂-, -COO-, *trans-* -CH=CH-, *trans*- -CF=CF-, -CH₂O-, -CF₂O- oder eine Einfachbindung und
r 0, 1 der 2 bedeutet
enthält.

8. Flüssigkristallanzeige, **dadurch gekennzeichnet, dass** sie ein Medium nach einem oder mehreren der Ansprüche 1 bis 7 enthält.

9. Anzeige nach Anspruch 8, **dadurch gekennzeichnet, dass** sie durch eine Aktivmatrix adressiert wird.

10. Verwendung eines Mediums nach einem oder mehreren der Ansprüche 1 bis 7 in einer Flüssigkristallanzeige.

11. Verfahren zur Herstellung eines Mediums nach einem oder mehreren der Ansprüche 1 bis 7, **dadurch gekennzeichnet, dass** eine oder mehrere Verbindungen der Formel I, wie in Anspruch 1 gegeben, mit einer oder mehreren der in einem oder mehreren der Ansprüchen 2 bis 7 genannten Verbindungen und/oder einer oder mehreren weiteren mesogenen Verbindungen und/oder einem oder mehreren Additiven gemischt wird.

## Claims

1. Liquid-crystal medium, **characterised in that** it comprises
- one or more compounds of the formula I 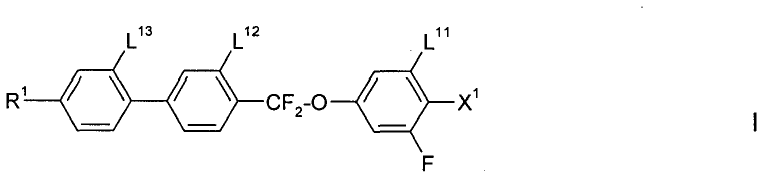 in which
R¹ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms,
L¹¹ denotes H, and L¹² and L¹³, independently of one another, denote H or F, or
L¹¹ denotes F, L¹² denotes F and L¹³ denotes H or F, and
X¹ denotes F, Cl, -CFH₂, -CF₂H, -CF₃, -OCF₂H or -OCF₃,
- one or more compounds of the formula II and
- one or more compounds of the formula III 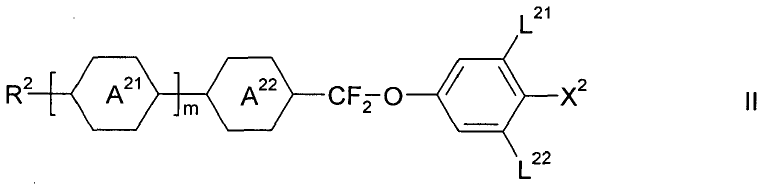 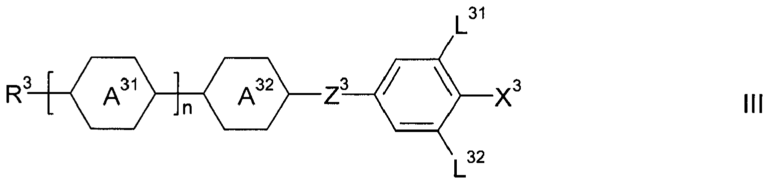 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 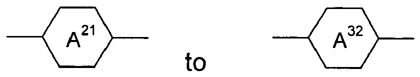 on each appearance, independently of one another, denote 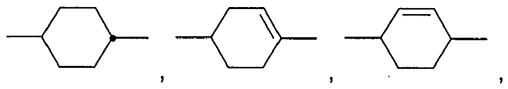 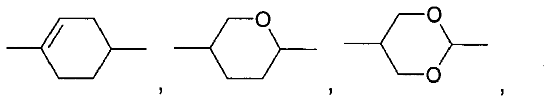 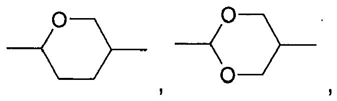 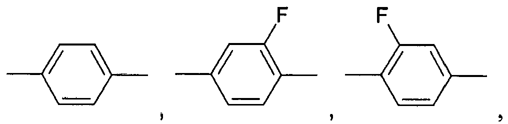 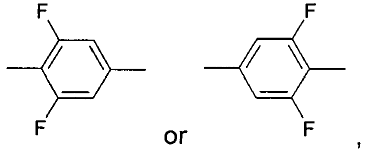
L²¹, L²², L³¹ and L³², independently of one another, denote H or F,
X² and X³, independently of one another, denote halogen, halogenated alkyl or alkoxy having 1 to 3 C atoms or halo-genated alkenyl or alkenyloxy having 2 or 3 C atoms,
Z³ denotes -CH₂CH₂-, -CF₂CF₂-, -COO-, *trans*-CH=CH-, *trans*-CF=CF-, -CH₂O- or a single bond, and
m and n, independently of one another, denote 0, 1, 2 or 3,
- and **in that** the one or more compounds of the formula III are or include one or more of the compounds selected from the group of the compounds of the formulae III-2d-1 and III-2e-1 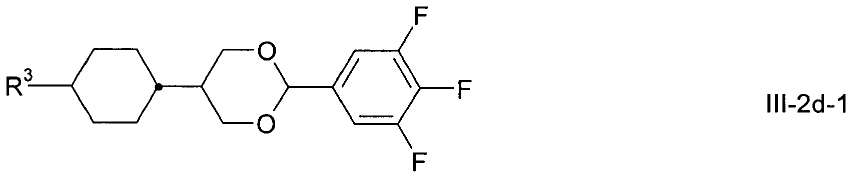 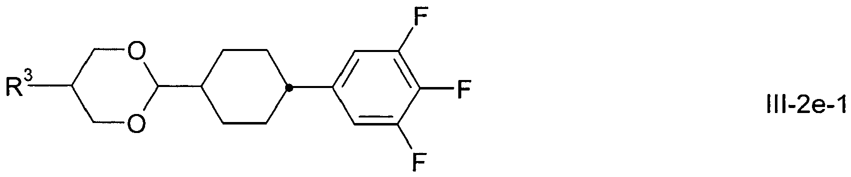 in which the parameters have the meanings indicated above and
where the compounds of the formula I according to Claim 1 are excluded from the compounds of the formula II.

2. Medium according to Claim 1, **characterised in that** it comprises
- one or more compounds selected from the group of the compounds of the formulae I-1 to I-4 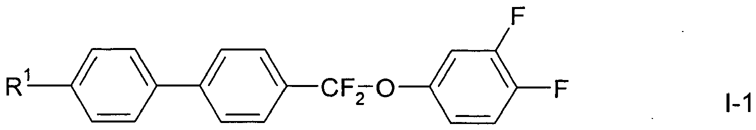 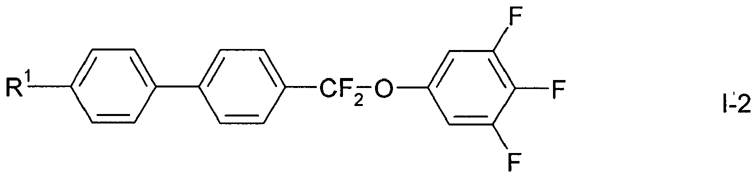 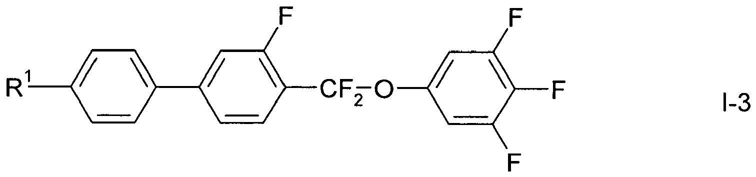 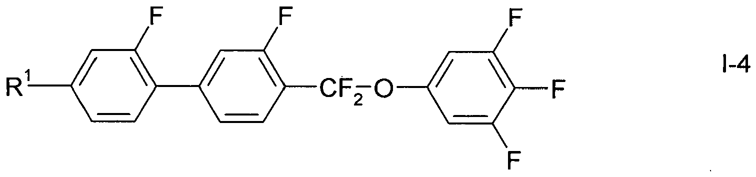 in which R¹ has the meaning indicated in Claim 1 under formula I.

3. Medium according to one of Claims 1 or 2, **characterised in that** it comprises
- one or more compounds of the formula IV 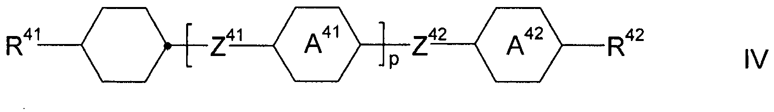 in which
R⁴¹ and R⁴², independently of one another, have the meaning indicated for R² in Claim 1 above under formula II, 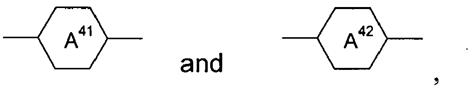 independently of one another and, if 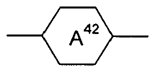 occurs twice, also these independently of one another, denote 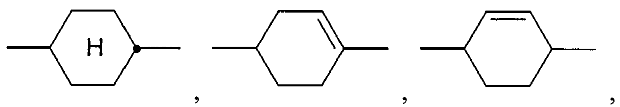 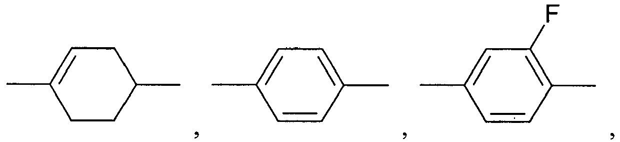 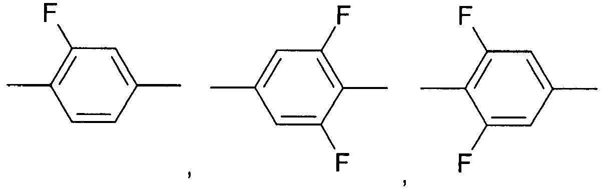 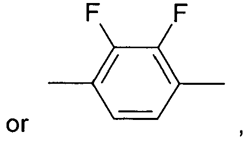
Z⁴¹ and Z⁴², independently of one another and, if Z⁴¹ occurs twice, also these independently of one another, denote -CH₂CH₂-, -COO-, *trans*-CH=CH-, *trans*-CF=CF-, -CH₂O- -CF₂O- -C=C- or a single bond, and
p denotes 0, 1 or 2.

4. Medium according to one or more of Claims 1 to 3, **characterised in that** the total concentration of the compounds of the formula I in the medium is in the range from 1% to 50%.

5. Medium according to one or more of Claims 1 to 4, **characterised in that** it comprises one or more compounds of the formula II-2j-1 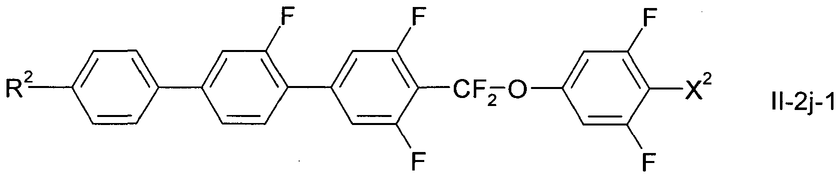 in which R² and X² have the meanings indicated in Claim 1 under formula II.

6. Medium according to one or more of Claims 1 to 5, **characterised in that** it comprises one or more compounds of the formula III-2d-1 as indicated in Claim 1.

7. Medium according to one or more of Claims 1 to 6, **characterised in that** it comprises one or more dielectrically neutral compounds of the formula V 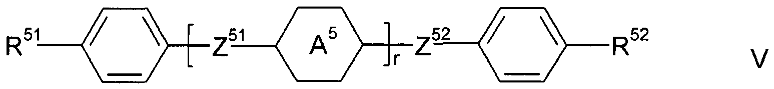 in which
R⁵¹ and R⁵², independently of one another, have the meaning indicated for R² in Claim 1 under formula II, 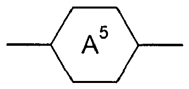 on each occurrence, independently of one another, denotes 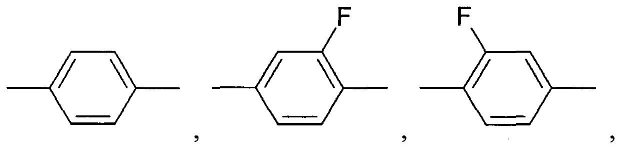 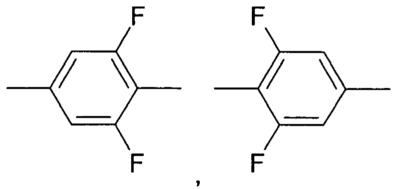 or 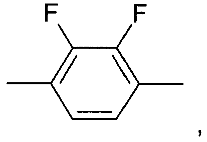
Z⁵¹ and Z⁵², independently of one another and, if Z⁶¹ occurs twice, also these independently of one another, denote -CH₂CH₂-, -COO-, *trans*-CH=CH-, *trans*-CF=CF-, -CH₂O-, -CF₂O- or a single bond, and
r denotes 0, 1 or 2.

8. Liquid-crystal display, **characterised in that** it contains a medium according to one or more of Claims 1 to 7.

9. Display according to Claim 8, **characterised in that** it is addressed by an active matrix.

10. Use of a medium according to one or more of Claims 1 to 7 in a liquid-crystal display.

11. Process for the preparation of a medium according to one or more of Claims 1 to 7, **characterised in that** one or more compounds of the formulae I, I and III, as given in Claim 1, are mixed with one or more of the compounds mentioned in one or more of Claims 2 to 7 and/or one or more further mesogenic compounds and/or one or more additives.

## Revendications

1. Milieu cristallin liquide, **caractérisé en ce qu'**il comprend :
- un ou plusieurs composés de la formule I 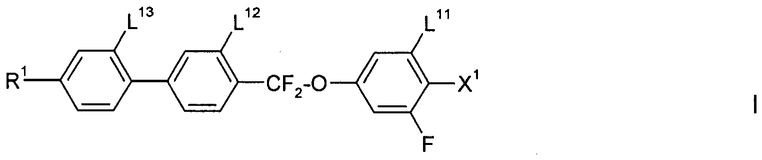 dans laquelle :
R¹ représente alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C,
L¹¹ représente H, et L¹² et L¹³ représentent, indépendamment l'un de l'autre, H ou F, ou
L¹¹ représente F, L¹² représente F et L¹³ représente H ou F, et
X¹ représente F, CI, -CFH₂, -CF₂H, -CF₃, -OCF₂H ou -OCF₃,
- un ou plusieurs composés de la formule II et
- un ou plusieurs composés de la formule III 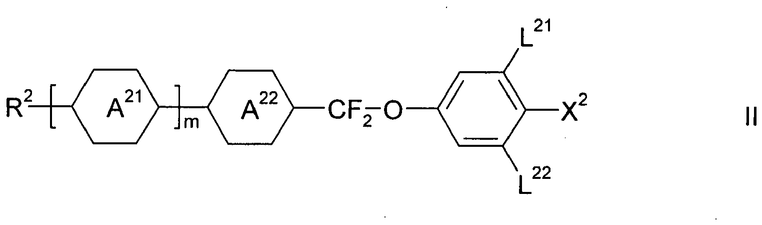 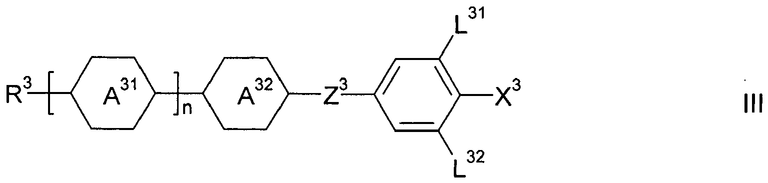 dans lesquelles :
R² et R³ représentent, indépendamment l'un de l'autre, alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C, 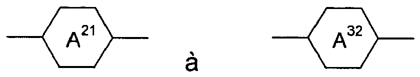 représentent, pour chaque occurrence, indépendamment les uns des autres, 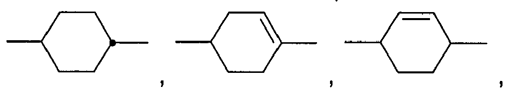 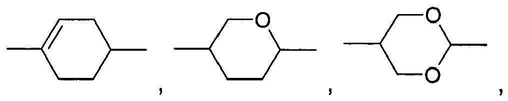 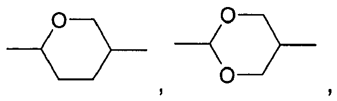 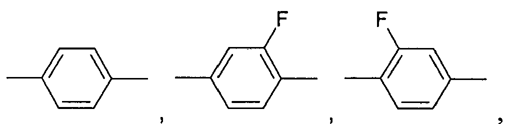 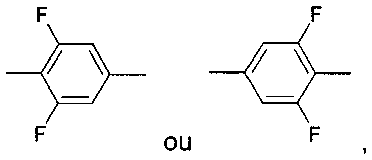
L²¹, L²², L³¹ et L³² représentent, indépendamment les uns des autres, H ou F,
X² et X³ représentent, indépendamment l'un de l'autre, halogène, alkyle ou alcoxy halogéné comportant de 1 à 3 atomes de C ou alkényle ou alkényloxy halogéné comportant 2 ou 3 atomes de C,
Z³ représente -CH₂CH₂-, -CF₂CF₂-, -COO-, *trans*-CH=CH-, *trans*-CF=CF-, -CH₂O- ou une liaison simple, et
m et n représentent, indépendamment l'un de l'autre, 0, 1, 2 ou 3,
- et **en ce que** les un ou plusieurs composés de la formule III sont ou incluent un ou plusieurs des composés choisis parmi le groupe des composés des formules III-2d-1 et III-2e-1 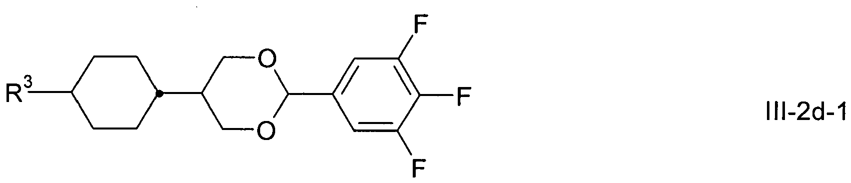 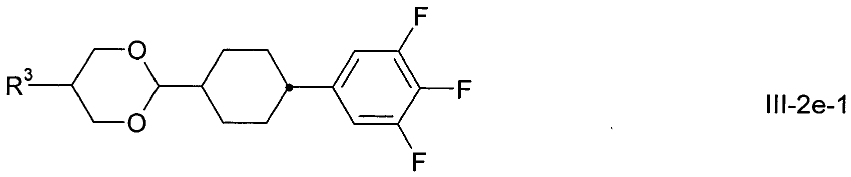 dans lesquelles les paramètres présentent les significations indiquées ci avant et
où les composés de la formule I selon la revendication 1 sont exclus des composés de la formule II.

2. Milieu selon la revendication 1, **caractérisé en ce qu'**il comprend :
- un ou plusieurs composés choisis parmi le groupe des composés des formules I-1 à I-4 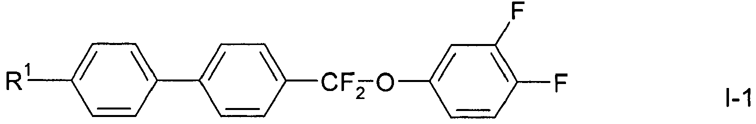 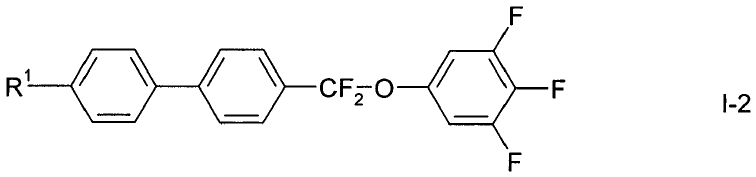 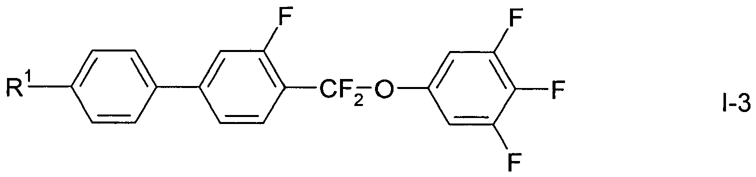 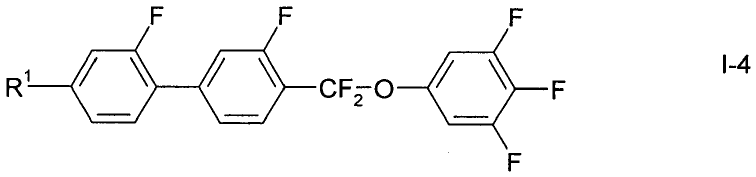 dans lesquelles R¹ présente la signification indiquée selon la revendication 1 au dessous de la formule I.

3. Milieu selon l'une des revendications 1 et 2, **caractérisé en ce qu'**il comprend :
- un ou plusieurs composés de la formule IV 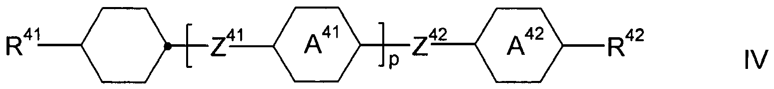 dans laquelle :
R⁴¹ et R⁴² présentent, indépendamment l'un de l'autre, la signification indiquée pour R² selon la revendication 1 ci avant au dessous de la formule II, 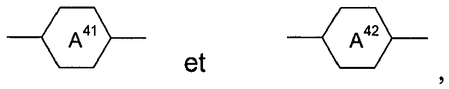 représentent, indépendamment l'un de l'autre et, si 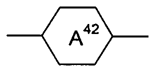 est présent selon une occurrence double, ces occurrences également de manière indépendante représentent, 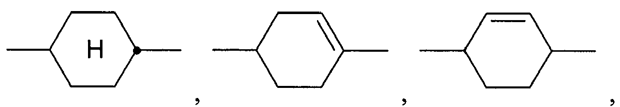 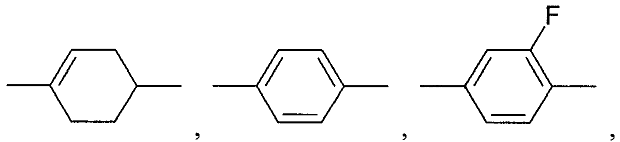 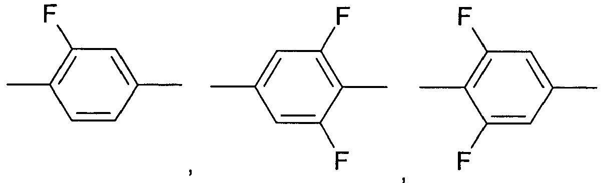 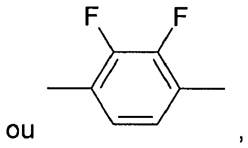
Z⁴¹ et Z⁴² représentent, indépendamment l'un de l'autre, et si Z⁴¹ est présent selon une occurrence double, ces occurrences également de manière indépendante représentent -CH₂CH₂-, -COO-, *trans*-CH=CH-, *trans*-CF=CF-, -CH₂O-, -CF₂O-, -C=C- ou une liaison simple, et
p représente 0, 1 ou 2.

4. Milieu selon une ou plusieurs des revendications 1 à 3, **caractérisé en ce que** la concentration totale des composés de la formule I dans le milieu est dans la plage de 1% à 50%.

5. Milieu selon une ou plusieurs des revendications 1 à 4, **caractérisé en ce qu'**il comprend un ou plusieurs composés de la formule II-2j-1 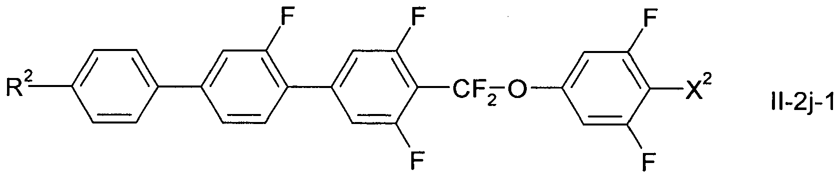 dans laquelle R² et X² présentent les significations indiquée selon la revendication 1 au dessous de la formule II.

6. Milieu selon une ou plusieurs des revendications 1 à 5, **caractérisé en ce qu'**il comprend un ou plusieurs composés de la formule III-2d-1 comme indiqué selon la revendication 1.

7. Milieu selon une ou plusieurs des revendications 1 à 6, **caractérisé en ce qu'**il comprend un ou plusieurs composés diélectriquement neutres de la formule V 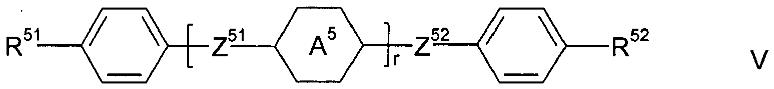 dans laquelle :
R⁵¹ et R⁵² présentent, indépendamment l'un de l'autre, la signification indiquée pour R² selon la revendication 1 au dessous de la formule II, 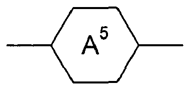 représente, pour chaque occurrence de manière indépendante des autres, 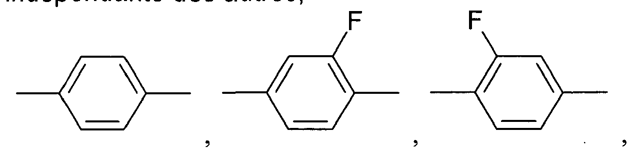 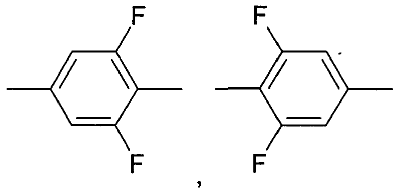 ou 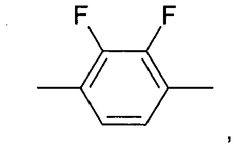
Z⁵¹ et Z⁵² représentent, indépendamment l'un de l'autre, et si Z⁶¹ est présent selon une occurrence double, ces occurrences également de manière indépendante représentent, -CH₂CH₂-, -COO-, *trans*-CH=CH-, *trans*-CF=CF-, -CH₂O-, -CF₂O- ou une liaison simple, et
r représente 0, 1 ou 2.

8. Affichage à cristaux liquides, **caractérisé en ce qu'**il contient un milieu selon une ou plusieurs des revendications 1 à 7.

9. Affichage selon la revendication 8, **caractérisé en ce qu'**il est adressé au moyen d'une matrice active.

10. Utilisation d'un milieu selon une ou plusieurs des revendications 1 à 7 dans un affichage à cristaux liquides.

11. Procédé pour la préparation d'un milieu selon une ou plusieurs des revendications 1 à 7, **caractérisé en ce qu'**un ou plusieurs composés des formules I, II et III, comme donné selon la revendication 1, est/sont mélangé(s) avec un ou plusieurs des composés mentionnés selon une ou plusieurs des revendications 2 à 7 et/ou un ou plusieurs composés mésogènes supplémentaires et/ou un ou plusieurs additifs.
